(19) Europäisches Patentamt
European Patent Office
Office européen des brevets

(11) **EP 2 010 308 B1**

(12) **FASCICULE DE BREVET EUROPEEN**

(45) Date de publication et mention
de la délivrance du brevet:
**12.04.2017 Bulletin 2017/15**

(21) Numéro de dépôt: **07728531.0**

(22) Date de dépôt: **25.04.2007**

(51) Int Cl.:
*B01D 67/00* *(2006.01)*  *B01D 71/02* *(2006.01)*
*C23C 4/12* *(2016.01)*  *C04B 41/87* *(2006.01)*
*B01D 69/02* *(2006.01)*  *B01D 69/12* *(2006.01)*
*C04B 41/52* *(2006.01)*  *C04B 41/45* *(2006.01)*
*C04B 41/50* *(2006.01)*  *C04B 41/49* *(2006.01)*
*C04B 41/00* *(2006.01)*  *C04B 35/00* *(2006.01)*
*C04B 35/46* *(2006.01)*  *C04B 35/47* *(2006.01)*
*C04B 41/85* *(2006.01)*  *C04B 41/89* *(2006.01)*
*C23C 4/134* *(2016.01)*  *C23C 4/11* *(2016.01)*
*C04B 111/00* *(2006.01)*  *B01D 61/02* *(2006.01)*
*B01D 61/14* *(2006.01)*

(86) Numéro de dépôt international:
**PCT/EP2007/054076**

(87) Numéro de publication internationale:
**WO 2007/122256 (01.11.2007 Gazette 2007/44)**

(54) **PROCEDE DE PREPARATION D'UNE COUCHE NANOPOREUSE DE NANOPARTICULES**

VERFAHREN ZUR HERSTELLUNG EINER NANOPORÖSEN NANOPARTIKELSCHICHT

METHOD FOR THE PREPARATION OF A NANOPOROUS LAYER OF NANOPARTICLES

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **26.04.2006  FR 0651477**

(43) Date de publication de la demande:
**07.01.2009 Bulletin 2009/02**

(73) Titulaire: **Commissariat à l'Énergie Atomique et aux Énergies Alternatives**
**75015 Paris (FR)**

(72) Inventeurs:
• **PINTAULT, Bruno**
**37260 Monts (FR)**
• **GUENADOU, David**
**04100 Manosque (FR)**
• **BIANCHI, Luc**
**37260 Artannes Sur Indre (FR)**
• **BELLEVILLE, Philippe**
**37000 Tours (FR)**
• **VALLE, Karine**
**37000 Tours (FR)**
• **BOSCHER, Christophe**
**37250 Montbazon (FR)**
• **TOULC'HOAT, Joël**
**37300 Joue Les Tours (FR)**

(74) Mandataire: **Ilgart, Jean-Christophe**
**BREVALEX**
**95, rue d'Amsterdam**
**75378 Paris Cedex 8 (FR)**

(56) Documents cités:
**EP-A- 1 134 302**   **WO-A-97/18341**
**WO-A1-2006/034674**   **WO-A1-2006/043006**
**US-A1- 2004 229 031**   **US-B1- 6 447 848**

## Description

### DOMAINE TECHNIQUE

La présente invention concerne un procédé de préparation, de mise en forme, d'une couche nanoporeuse de nanoparticules sur une surface d'un substrat.

Plus précisément, la présente invention a trait à un procédé de préparation d'une membrane nanoporeuse.

Le domaine technique de l'invention peut de manière générale être défini comme celui des matériaux nanostructurés, plus particulièrement ce domaine technique est celui des matériaux nanoporeux mis sous la forme de couches notamment de couches minces appelées couramment membranes d'une épaisseur par exemple de 1 à 100 $\mu$m.

De telles membranes trouvent leur application dans les domaines de l'ultrafiltration, de la purification, de la séparation des gaz ou de différentes phases, de la catalyse hétérogène, des réacteurs chimiques auto-supportés de la diffusion gazeuse, et des capteurs (« préconcentrateurs »).

Les matériaux nanostructurés sont définis comme étant des matériaux présentant une organisation à l'échelle nanométrique, c'est-à-dire à une échelle allant de quelques nm à quelques centaines de nm. Ce domaine de taille est celui où se trouvent les longueurs caractéristiques des différents processus physiques, électroniques, magnétiques, optiques, supraconductivité, mécaniques, etc. et où la surface joue un rôle prépondérant dans ces processus, ce qui confère à ces « nanomatériaux » des propriétés spécifiques et souvent exaltées. De par ces caractéristiques, ces matériaux offrent un véritable potentiel dans la construction de nouveaux édifices performants à propriétés spécifiques.

La possibilité de fabriquer des nanostructures permet de développer des matériaux innovants et offre la possibilité de les exploiter dans de nombreux domaines comme l'optique, l'électronique, l'énergie, etc. Ces nanomatériaux offrent des retombées fondamentales indéniables et des applications et potentialités d'application importantes dans diverses technologies à venir comme les piles à combustibles, les revêtements « intelligents », les matériaux résistants (barrière thermique).

La présente invention permet de développer de nouveaux revêtements nanostructurés et plus précisément des couches ou membranes nanoporeuses par un procédé simple et facilement industrialisable, et ouvre ces technologies aux industriels. L'essence du concept « nano » est l'assemblage d'espèces nanométriques, capables de remplir une fonction sophistiquée ou de constituer un matériau aux propriétés sans précédent.

Les références entre crochets ([ ]) renvoient à la liste des références bibliographiques présentée à la suite des exemples.

## ART ANTERIEUR

Il n'existe pas actuellement de technique simple à mettre en oeuvre et permettant d'obtenir des revêtements, couches de nanoparticules qui répondent aux exigences de plus en plus grandes d'homogénéité de structure et d'épaisseur, même à l'échelle de quelques microns, de résistance mécanique, et de porosité contrôlée du fait de la miniaturisation des microsystèmes électromécaniques et/ou optiques et/ou électrochimiques.

Les inventeurs de la présente se sont intéressés à la projection plasma ou projection thermique. Il s'agit d'une technique utilisée en laboratoire de recherche et dans l'industrie pour réaliser des dépôts de matériaux céramiques, métalliques ou cermets, ou polymères ainsi que des combinaisons de ces matériaux sur différents types de substrats (forme et nature).

Le dépôt a pour fonction de conférer à la pièce revêtue une propriété particulière : protection contre la corrosion, barrière thermique... Son principe repose sur un jet plasma généré à l'intérieur d'une torche par arc électrique ou induction. Un matériau pulvérulent (céramique, métal, polymère) est injecté - soit en voie sèche, par un vecteur gazeux, soit en voie humide, par un vecteur liquide - dans cet écoulement chaud et véloce.

Dans le cas de la voie sèche, les particules sont accélérées, fondues, impactent sur la pièce à revêtir et s'empilent pour former le dépôt.

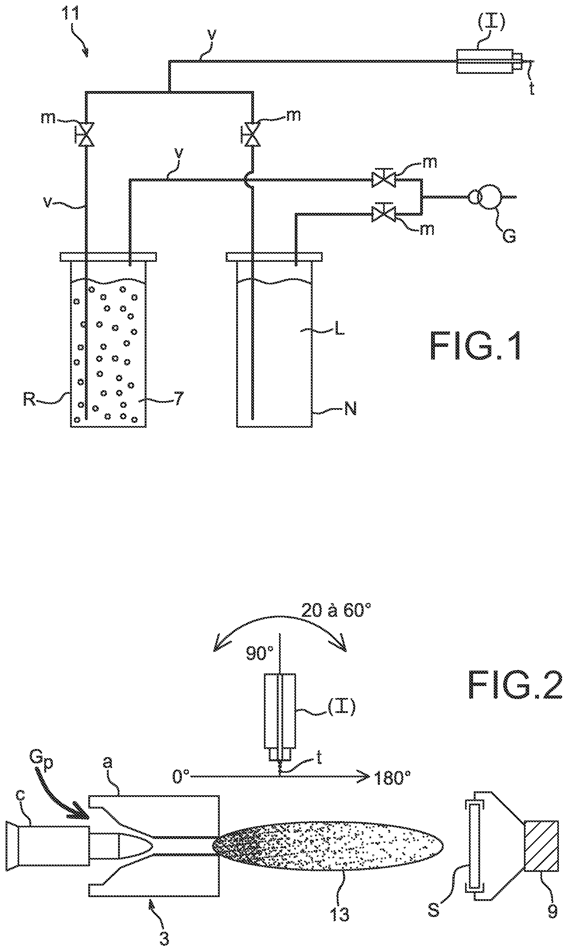

Dans le cas de la voie humide, le liquide est fragmenté en gouttelettes au contact du plasma, puis accéléré et vaporisé. Les particules solides résultantes sont éventuellement fondues et impactent le substrat où elles se refroidissent et s'empilent pour former le dépôt (voir figure 1).

La voie sèche est limitée par la taille des particules injectables dans le plasma. En deçà d'une granulométrie critique située à environ 10 $\mu$m, les particules n'ont plus assez de quantité de mouvement pour pénétrer l'intérieur du jet plasma. Elles restent en périphérie et ne sont pas fondues.

La voie humide permet de s'affranchir de cette limite physique, mais est limitée par la stabilité des mélanges liquide/poudre (suspension).

Plus précisément, le dépôt ou couche formée par voie sèche, d'épaisseur généralement supérieure à 100 $\mu$m, possède une structure lamellaire fortement anisotrope caractéristique des dépôts réalisés par projection plasma. Ces techniques ne permettent donc pas de former des revêtements de nanoparticules, ni des revêtements ayant des épaisseurs inférieures à 100 $\mu$m, allant jusqu'à quelques microns.

De plus, les revêtements obtenus présentent l'inconvénient d'être micro-fissurés, notamment dans le cas de dépôts de céramiques, matériaux fragiles qui relâchent ainsi les contraintes internes.

En outre, il a été constaté que le revêtement obtenu présente une structure lamellaire qui conditionne fortement ses propriétés thermomécaniques, ce qui limite donc clairement, a priori, les applications potentielles de la projection plasma.

Particulièrement, l'apparition de nouvelles applications, notamment en microélectronique et sur les laboratoires sur puce, nécessite de réaliser des dépôts d'épaisseur inférieure à 50 $\mu$m, constitués de grains de taille sub-micronique ne possédant pas obligatoirement une structure lamellaire, et en utilisant des vitesses de dépôt élevées. Or, il n'est pas possible actuellement de faire pénétrer des particules de diamètre inférieur au micron dans un jet de plasma à l'aide d'un injecteur classique à gaz vecteur, sans perturber considérablement celui-ci. En effet, la vitesse élevée du gaz porteur froid, nécessaire à l'accélération de particules fines, entraîne une forte diminution de la température et de la vitesse d'écoulement du plasma, propriétés essentielles pour fondre et entraîner les particules.

C'est pour surmonter ces difficultés que les procédés par voie humide, cités plus haut, ont été développés.

Différentes solutions ont été proposées à cet égard. Ainsi, le document [1] de Lau et al. décrit l'utilisation d'une solution aqueuse, constituée d'au moins trois sels métalliques, atomisée dans un plasma inductif non supersonique. Il en résulte des dépôts de céramiques supraconductrices mais qui ne présentent pas de structure nanométrique et encore moins nanoporeuse.

Le document [2] de Marantz et al. décrit une injection axiale dans un plasma d'arc soufflé d'une solution colloïdale. La réalisation de dépôts nanostructurés et en particulier nanoporeux n'est pas mentionnée, ni suggérée. De plus, ce procédé est difficilement industrialisable car il nécessite l'utilisation de deux à quatre torches à plasma fonctionnant simultanément.

Le document [3] de Ellis et al. décrit un procédé dans lequel un composé organo-métallique est introduit dans un plasma inductif non supersonique sous forme gazeuse ou solide. Le dépôt formé ne présente cependant pas de structure nanométrique ni a fortiori nanoporeuse.

Dans le document [4], Gitzhofer et al. décrivent l'utilisation d'un liquide chargé de particules ayant une taille de l'ordre du micron. Ce liquide est injecté dans un plasma sous la forme de gouttelettes au moyen d'un atomiseur. Cette technique est limitée aux plasmas de type radio-fréquence et les dépôts résultants ne sont pas nanostructurés ni nanoporeux.

Dans le document [5], Chow et al. décrivent une méthode consistant en l'injection de plusieurs solutions dans un jet de plasma afin d'obtenir des dépôts possédant une structure nanométrique. Cependant, le matériau final est issu d'une réaction chimique en vol dans le plasma, rendant la méthode complexe à maîtriser. En outre, dans cette méthode (qui met en jeu une réaction chimique dans le plasma) les tailles de particules sont de 100 nm ; la méthode prévoit nominalement une conversion chimique durant le processus de projection et utilise des dispersants ; et les conditions de projection sont choisies explicitement pour ne pas vaporiser le solvant de la solution projetée avant d'atteindre le substrat.

En d'autres termes, ce document décrit un dépôt nanostructuré réalisé par projection thermique d'une solution et non d'un sol stabilisé comme dans le procédé selon l'invention.

Ce procédé permet une tranformation des atomes-molécules en gouttelettes d'aérosol et les réactions chimiques ultérieures pour former les couches de matériau sur le substrat.

Ce procédé ne met pas en oeuvre un sol colloïdal stabilisé et dispersé contenant des nanoparticules qui sont projetées (par une torche plasma) sur un substrat où elles s'empilent pour former un dépôt.

La solution de précurseur mise en oeuvre dans ce document ne constitue pas un sol colloïdal dans lequel les nanoparticules sont stabilisées et dispersées.

Dans le document [6], Kear et al proposent l'injection d'une solution contenant des agglomérats de poudres nanostructurées sous forme d'un spray dans un plasma. L'utilisation d'un spray impose différentes étapes afin que la taille des particules à injecter soit suffisamment importante (de l'ordre du micron) pour pénétrer dans le plasma : séchage de la solution contenant des particules de petite taille, agglomération de ces particules à l'aide d'un liant et mise en suspension colloïdale des agglomérats de taille supérieure au micron. Ce procédé nécessite une assistance ultrasons ou l'utilisation de dispersants, par exemple des tensioactifs, pour maintenir la dispersion des particules en suspension dans le liquide.

En résumé, dans ce document, on ne peut pas véritablement parler de nanoparticules mais plutôt d'un agglomérat de nanoparticules, en outre on ne met pas en oeuvre dans ce document un sol colloïdal dans lequel les particules sont stabilisées et dispersées.

Le document [7] de Rao N.P. et al. décrit une méthode où des précurseurs gazeux, injectés radialement dans un plasma d'arc, donnent lieu à la formation de particules solides en vol par nucléation-croissance. Cependant, l'épaisseur des dépôts formés ne peut dépasser la dizaine de microns et il n'est pas possible de réaliser tout type de matériaux.

Le document US 2004/0229031 A1 (Maurice Gell et al.) [18] décrit la mise en forme d'un matériau nanostructuré par projection thermique d'une solution de précurseur.

La solution de précurseur est préparée par dissolution du précurseur dans un solvant. Ce document cite entre autres comme précurseur, le nitrate de zirconium, le nitrate d'aluminium, l'acétate de cérium, le carbonate de zirconium et comme solvant, l'eau, les alcools contenant 1 à 5 atomes de carbone, les solvants organiques, l'acide carboxylique et la combinaison de ceuxci. Dans le cas d'un matériau complexe, les composants élémentaires sont mélangés en rapport avec la stochiométrie désirée.

En aucun cas, on n'utilise dans ce document des suspensions colloïdales ou des sols contenant des nanoparticules. Il y a, par ailleurs, modification de la solution injectée dans le plasma par pyrolyse pour former le matériau du dépôt. Dans le procédé selon l'invention, la structure et la composition des nanoparticules formant le sol se retrouvent dans le dépôt. Le procédé de préparation de la couche selon ce document est donc différent de celui selon l'invention.

Le document EP-A1-1 134 302 [19] décrit un procédé de réalisation de couches nanostructurées par projection thermique de solution compartimentée. Les dépôts sont réalisées par injection dans un jet thermique d'une solution de « nano-compartiments ». Ces derniers peuvent être une dispersion, une émulsion, une microémulsion, ou un système sol-gel. Il s'agit notamment de dispersions huile/eau, eau/huile et bicontinues, stabilisées par des surfactants, dans lesquelles la phase continue a la forme de gouttes de tailles entre 150 Angstroms et 1 micron.

La solution injectée se limite aux solutions de matériaux métalliques. Dans les exemples, on utilise une flamme alimentée au butane/propane ce qui limite sa température à 1200°C. En raison de cette basse température, seul des matériaux métalliques à bas point de fusion peuvent être utilisés.

Par ailleurs, ce document ne décrit pas de moyen d'injection dans le jet thermique.

Le procédé selon l'invention utilise une technique fondamentalement différente, la projection plasma où des températures de flamme beaucoup plus élevées, à savoir généralement voisines de 12000°C en sortie de torche sont utilisées. Une telle température permet l'utilisation des oxydes métalliques, qui sont mis en oeuvre sous forme de sol et injectés dans le plasma pour former le dépôt. Au contraire, dans le document EP-A1- 1 134 302 A1 on utilise uniquement des métaux.

On peut noter par ailleurs que dans le document EP-A1-1 134 302 A1 ni la nature du système sol-gel, ni son élaboration ne sont décrites. Dans la description détaillée de ce document, seuls des nano- compartiments sont décrits sous une forme de microémulsion et non de sol.

Les problèmes liés à la technique plasma sont donc très nombreux, les solutions proposées également, mais aucune de ces solutions ne permet actuellement de résoudre l'ensemble de ces problèmes.

Les inventeurs se sont aussi intéressés aux procédés de dépôt sol-gel existants, notamment dans le domaine des revêtements pour l'optique. Ces procédés utilisent habituellement des méthodes de dépôt par voie liquide telles que l'enduction centrifuge (« spin-coating »), l'enduction laminaire (« meniscus-coating »), le trempage-retrait (« dip-coating »), la pulvérisation d'aérosol (« spray-coating »). Ces différentes techniques conduisent à des couches minces dont l'épaisseur est généralement inférieur au micron. Certains de ces procédés de dépôt permettent de revêtir de grandes surfaces par exemple de quelques centaines de cm$^2$ à quel-ques m$^2$, ce qui constitue un avantage.

Cependant, les revêtements obtenus par ces procédés se fissurent au-delà d'épaisseurs critiques de l'ordre du micron. La cause principale de ce défaut majeur réside dans les contraintes de tension appliquée par le substrat lors des traitements thermiques nécessaires à leur élaboration. Un autre inconvénient réside dans l'impossibilité de déposer des revêtements homogènes ayant une bonne adhésion, même pour des épaisseurs supérieures à quelques micromètres.

Les problèmes liés à cette autre technique sont donc également très nombreux, même si des techniques récentes ont permis d'en résoudre certains en agissant sur la composition chimique des solutions sol-gel.

Si l'on s'intéresse maintenant aux membranes nanoporeuses, l'ensemble de leurs applications fait appel au principe de la séparation moléculaire ou filtration qui consiste à éliminer les impuretés d'un fluide par blocage de celles-ci en surface en dans l'épaisseur du filtrant.

En filtration classique, avec des membranes à porométrie micrométrique ou millimétrique (tamis, mousse, lie de sable...), les impuretés correspondent à des particules solides en suspension dans le fluide.

Dans le cas de l'ultrafiltration, pour laquelle la membrane présente une répartition de pore entre 1 et 100 nm, les impuretés se rapportent à des macromolécules ou des colloïdes. Ceux-ci, du fait de leur taille plus élevée que le plus gros pore traversant de la membrane restent bloquées en surface ou dans l'épaisseur de la membrane. Ce procédé est valable pour les liquides et les gaz. Les membranes d'ultrafiltration sont qualifiées par le pore traversant le plus gros de la membrane. Il correspond à la plus petite entité pouvant être retenue. Usuellement, on exprime les performances de filtration en daltons (symbole Da, 1 Da=1,660.10$^{-24}$ g/molécule=1 g/mol), unité de mesure de masse d'une molécule. La gamme d'ultrafiltration s'étale de façon générale de 15 à 300 kDa. On citera comme exemple d'applications de l'ultrafiltration :

- La concentration de solutions macromoléculaires (protéines, polysaccharides...) dans l'industrie agroalimentaire.
- L'élimination de macrosolutés présents dans les effluents ou dans l'eau à usage domestique, industriel (l'industrie électronique nécessite des fluides propres) et médical.
- La séparation de l'huile et de l'eau.
- La clarification et/ou purification de liquide.

La séparation de phase, réalisée usuellement par décantation, peut s'opérer au moyen de membranes présentant un caractère mixte d'affinité en regard des phases à séparer : caractère hydrophile/hydrophobe, acide/base, oxydant/réducteur, donneur/accepteur ...

Par exemple, la surface de la membrane peut naturellement être hydrophobe (polytétrafluoroéthylène par exemple) ou être fonctionnalisée par greffage covalent de molécules hydrophobes (de type fluoré ou alkyle par exemple). La taille nanométrique des pores enforce l'efficacité de séparation-filtration qui ne peut être totalement assurée par le caractère hydrophobe (loi de Jurin).

Les intérêts de ce type de séparateur de phase sont :

- Sa compacité, la membrane et son support étant fins (de un à quelques millimètres).
- Son utilisation en ligne. Ce système peut être aisément intégré à une canalisation.
- La possibilité de l'utiliser dans n'importe quelle position, alors qu'un procédé de décantation nécessite une orientation en fonction de la direction de la pesanteur.
- Une utilisation à haute température et à haute pression. La membrane céramique n'est pas dégradée thermiquement et un greffage de molécules perfluorées via une fonction organométallique (de type alcoxysilane) est stable jusqu'à environ 300°C.
- Le dépôt d'une telle membrane sur tous types de support (céramique, métallique, verre, cristalline...)

Les membranes sélectives sont couramment en matériaux organiques polymères : cellulose, polyéthersulfone, polypropylène, polytétrafluoroéthylène...

Ce type de membrane n'est pas stable thermiquement et chimiquement. La température maximale d'utilisation des meilleurs matériaux n'excédent pas les 110°C (polyéthersulfone). La compatibilité chimique en regard du fluide à traiter doit être attentivement étudié. Par ailleurs les gammes de pression admissible restent faibles en raison de la compressibilité des matériaux polymères : pour de forte pression, le polymère se densifie, rendant totalement étanche la membrane.

Les membranes nanoporeuses céramiques ne présentent pas ces inconvénients. Elles sont stables thermiquement, en effet leur température maximale de fonctionnement, pour des membranes non fonctionnalisées est uniquement conditionnée par le température de fusion ou ramollissement de la matrice oxyde, et elle peut donc dans certains cas excéder les 1000°C. Elles sont également stables chimiquement car elles sont constituées essentiellement par des oxydes métalliques. En raison de leur structure rigide, elles peuvent fonctionner sous de haute pression. Ces propriétés permettent de les nettoyer et de les stériliser pour réutilisation, ce qui les rend intéressantes économiquement. Néanmoins, elles restent plus difficiles à mettre en oeuvre.

Plusieurs brevets et demandes de brevets mentionnent des techniques de fabrication. La plupart sont basées sur des techniques d'enduction-frittage.

Le brevet US-A-6,261,510 de TNO (USA) propose la fabrication de tube nanoporeux par extrusion d'un mélange suffisamment visqueux de poudre céramique submicronique, d'un solvant et d'un liant. L'étape finale est un frittage. Ce brevet se limite à des géométries tubulaires.

Dans le brevet US 5,342,431, la membrane nanoporeuse est mise en forme par enduction d'un support poreux d'une suspension colloïdale céramique. Un flux thermique est imposé en face opposé à l'enduction afin que les particules soient déposées comme un gel. Un frittage achève la fabrication. Les auteurs affirment obtenir une taille de pore moyenne inférieure à 30 Angstroms.

La demande WO-A-99/11582 déposé par PALL CORP (USA) propose une mise en forme par précipitation de précéramique polymère sur un substrat et frittage. Les auteurs affirment obtenir une porosité élevée (supérieure à 50%) et contrôler la taille et la forme des pores. Cette technique reste utilisable pour une gamme de matériau restreint au précéramique polymère (par exemple, les polysiloxanes, les polysilanes...) et comprend toujours une étape finale de frittage.

Pour tous ces procédés, l'étape de frittage, interdit la création de membrane nanoporeuse sur un substrat thermosensible.

En résumé, aucune de ces techniques de l'art antérieur ne permet d'obtenir un revêtement nanoporeux de nanoparticules d'épaisseur supérieure à 10 $\mu$m. Ces techniques n'indiquent pas de voie prometteuse pour y arriver simplement et se limitent à des géométries simples par exemple tubulaires ou planaires.

En outre, ces techniques sont généralement moins productives, dans la mesure où elles font appel à la combinaison de plusieurs procédés pour la mise en forme finale.

## EXPOSÉ DE L'INVENTION

Le but de la présente invention est précisément de fournir un procédé permettant de former un revêtement nanostructuré plus précisément une couche nanoporeuse qui réponde aux besoins indiqués ci-dessus et apporte une solution à l'ensemble des inconvénients précités.

Ce but et d'autres encore sont atteints conformément à l'invention par un procédé de préparation d'au moins une couche nanoporeuse de nanoparticules tel que défini dans la revendication 1 .

Les inventeurs sont les premiers à résoudre les inconvénients précités des techniques de l'art antérieur relatives au dépôt plasma grâce à ce procédé. Par rapport aux anciennes techniques, il consiste notamment à remplacer le gaz d'injection en voie sèche par un liquide porteur spécifique constitué d'un sol colloïdal. Les particules projetées sont ainsi stabilisées en milieu liquide avant d'être accélérées dans un plasma.

Comme exposé ci-dessus, des travaux plus récents ont déjà été réalisés relativement à l'injection d'un matériau se trouvant sous une autre forme que pulvérulente dans un plasma et notamment sous forme liquide. Cependant, aucun de ces travaux n'utilise ni ne suggère une injection directe dans un jet de plasma d'un sol colloïdal, ou solution sol-gel colloïdale, de nanoparticules, et la possibilité de réalisation de dépôts nanostructurés de tout type de matériau possédant la même composition chimique et structurale que le produit initial.

Plus précisément, il est ni décrit ni suggéré dans l'art antérieur la réalisation de dépôts de nanoparticules, sous la forme de couches nanoporeuses encore appelées membranes nanoporeuses.

En d'autres termes, le procédé selon l'invention peut être défini comme un procédé de protection thermique par jet plasma par voie humide qui est mis en oeuvre avec un liquide spécifique qui est un sol de nanoparticules. On comprend bien que un ou plusieurs sols peuvent être mis en oeuvre successivement ou simultanément.

Dans le cadre de la voie humide, le procédé sol-gel offre des nombreuses possibilités dans la synthèse de suspensions colloïdales stables et nanoparticulaires. Cette chimie douce permet notamment de synthétiser, à partir de précurseurs inorganiques ou organométalliques, des oxydes métalliques. La nucléation de ces particules a lieu en milieu liquide. Ces nanoparticules peuvent directement être stabilisées dans ce même solvant au cours de la synthèse ou peptiser ultérieurement si elles sont synthétisées par précipitation. Dans les deux cas la suspension colloïdale obtenue est appelée sol. La taille des particules est parfaitement contrôlée par les conditions de synthèse (précurseurs, solvant, pH, température...) de quelques angströms à quelques microns.

Le procédé de la présente invention permet en outre, de manière inattendue, la conservation des propriétés nanostructurales du matériau projeté, grâce à la projection thermique d'une suspension stabilisée (sol) de particules nanométriques. Le procédé de l'invention en utilisant des sols « auto-stabilisés » permet d'éviter le recours à des moyens de dispersion annexes tels que les ultrasons, l'atomisation, l'agitation mécanique, etc. durant la phase de projection. La présente invention permet par conséquent à la fois de conserver la pureté du matériau projeté et de simplifier le procédé de mise en oeuvre. C'est également notamment grâce à l'utilisation d'un sol que l'agrégation des nanoparticules est limitée, et que le procédé de l'invention aboutit à un revêtement nanostructuré homogène plus particulièrement à une couche nanoporeuse.

De plus, grâce au procédé de la présente invention, les inventeurs exploitent l'avantage singulier des sols-gels d'offrir de très nombreuses voies physicochimiques d'obtention de suspensions colloïdales stables et nanoparticulaires. La chimie douce de constitution des sols-gels permet notamment de synthétiser, à partir de précurseurs inorganiques ou organométalliques très nombreux, une pluralité d'oxydes métalliques différents.

En outre, la présente invention utilise aussi la propriété avantageuse des sols-gels de permettre la synthèse de particules inorganiques de phases cristallines différentes (cas de la zircone par exemple), dans un même sol, par exemple en utilisant la voie hydrothermale ou dans des conditions plus douces. Dans cette chimie, la nucléation des particules a lieu en milieu liquide. L'accès à des sols colloïdaux mixtes constitués par exemple d'un mélange de nanoparticules d'oxydes de métaux de nature différente, et/ou de nanoparticules d'un oxyde métallique dopé par un autre oxyde de métal et/ou tout mélange de nanoparticules d'oxyde de métal et de nanoparticules d'oxydes métalliques dopés par un autre oxyde de métal, offre également de très nombreuses variantes.

Par ailleurs, grâce au procédé de l'invention, on peut améliorer encore et affiner l'homogénéité et la stabilité du sol en sélectionnant judicieusement la granulométrie des particules du sol ainsi que le solvant utilisé. En effet, des conditions préférées du procédé de l'invention permettent de limiter d'avantage encore, voire d'éviter, des ségrégations de nanoparticules, gradients de concentration ou sédimentations.

Egalement, des conditions de projection plasma, ainsi que des protocoles d'injection du sol permettent d'agir sur la qualité du revêtement de nanoparticules formé, et, suivant divers exemples présentés ci-dessous, permettent d'améliorer encore la qualité et d'affiner la conservation des propriétés des particules du sol colloïdal au sein du matériau de revêtement.

En d'autres termes, le principe de la préparation, de la mise en forme, de la couche nanoporeuse par le procédé selon l'invention repose sur l'injection d'un sol colloïdal composé de nanoparticules dans un jet de plasma thermique. Les nanoparticules de ce sol sont projetées et s'empilent sur un substrat pour former le dépôt nanoporeux. Ces nanoparticules sont des nanoparticules d'oxyde(s) métallique(s) et ne subissent pas de modification lors de la projection. De ce fait, le dépôt, la couche, préparée par le procédé selon l'invention a la même composition que le sol initial.

Le procédé de projection d'un sol mis en oeuvre selon l'invention consiste à injecter dans un plasma thermique, généralement à forte vitesse et à haute température, un liquide qui est un sol colloïdal dans lequel les nanoparticules sont dispersées et stabilisées.

Le jet continu de liquide, sous l'effet des hautes vitesses en sortie de torche qui sont généralement supérieures ou égales à 1000 M/s, de préférence de 1000 à 2000 M/s, se fragmente en fines gouttelettes, généralement de 2 à 20 microns par exemple d'une dizaine de microns de diamètre. Ce diamètre dépend essentiellement de la nature du liquide injecté. Ces gouttelettes, soumises à de hautes vitesses et températures (par exemple de 12000 K en sortie de torche), sont accélérées et s'évaporent pour inclure dans le jet de plasma les nanoparticules solides du sol initial. Les particules, unitaires ou rassemblées sous forme d'amas soumises à ces hautes températures, chauffent, fondent avant d'impacter le substrat, d'entrer en collision avec le substrat, pour s'empiler et former ainsi le dépôt.

Leur vitesse à l'impact sur le substrat est faible comparé à la technique de projection classique de poudre. En effet, les nanoparticules ayant une masse très faible, sont portées par l'écoulement plasma. Or sur le substrat, la vitesse des gaz est fortement réduite en raison de l'obstacle qu'il constitue (point d'arrêt).

Pour réaliser une structure poreuse avec le procédé selon l'invention utilisant des matériaux pulvérulents il faut créer des défauts d'empilement entre les particules lors de la construction du dépôt.

Les mécanismes décrivant la réalisation d'un dépôt nanostructuré par la technique de projection d'un sol permettent de déterminer les facteurs clés conduisant à des défauts d'empilement et ainsi à une structure nanoporeuse.

Pour obtenir un dépôt, les particules doivent être fondues afin de se souder les unes aux autres. Dans le cas contraire, sous l'effet de leur quantité de mouvement, elles rebondissent à la surface du substrat. Néanmoins, pour créer des défauts d'empilement, les particules avant impact doivent être dans un état de fusion partielle. En projection classique de poudre de granulométrie supérieure au micron, l'état partiel de fusion ne permet pas d'obtenir un dépôt : le coeur non fondu rebondit sur le substrat et ne permet pas l'adhésion de la matière sur la surface.

Mais dans le cas de la projection d'un sol, en raison de leur faible vitesse, à savoir généralement de 20 à 1 M/s et même inférieure à 1 M/s, les nanoparticules partiellement fondues se soudent entre elles à l'impact sur leur périphérie sans rebondir sur le substrat : elles frittent légèrement.

Cette fusion partielle peut être obtenue en protégeant les nanoparticules du flux thermique du plasma.

La température en sortie de torche ne peut pas être abaissée au dessous de 8000 K en jouant sur les paramètres plasma tels que l'intensité du courant, le type de gaz, le débit, etc....

Il a été mis en évidence selon l'invention qu'un moyen permettant de limiter facilement la fusion des nanoparticules, à savoir :

- injecter directement le sol dans une zone « froide » du plasma ; par zone froide on entend généralement que la température qui y règne est de 3000 à 4000 K.

Selon l'invention, le sol ou la suspension est injectée directement dans les zones « froides du plasma », à savoir les zones dans lesquelles la température est généralement de 3000 à 4000 K. Celles-ci sont généralement situées à 50-60 mm de la sortie de torche, mais dépendent fortement des conditions plasma utilisées telles que intensité, gaz plasmagènes, débit, diamètre de torche....

Le solvant du sol doit être choisi de telle sorte qu'il crée de fines gouttelettes et à s'évapore le plus rapidement possible. En effet dans les zones « froides » les vitesses sont beaucoup plus faibles, par exemple notamment de 200 M/s, rendant la fragmentation des gouttes moins bonne. Il en résulte une évaporation plus lente en raison de gouttes plus grosses et d'un flux plasma moins intense. Si le liquide est totalement évaporé trop en aval, la température du jet devient trop basse pour permettre une fusion même partielle des nanoparticules.

Le solvant doit avoir une chaleur latente, une capacité calorifique et une tension superficielle faible.

Les alcools de manière générale, et par exemple les alcools aliphatiques de 1 à 5C tels que l'éthanol, le méthanol satisfont à ces critères.

L'éthanol, notamment, répond à ces exigences (chaleur spécifique $2,44.10^3$ J/Kg/K ; chaleur latente de vaporisation $8,7.10^5$ J/kg ; tension de surface $21,98.10^{-3}$ N/m à 293 K).

Le dépôt ainsi réalisé est très poreux.

La porométrie dépend de la taille et de la morphologie des nanoparticules. A morphologie identique, plus les particules sont grosses, plus les défauts d'empilement sont étendus, plus le diamètre équivalent des pores est grand. Cette caractéristique permet de moduler le diamètre des pores pour obtenir précisément une porométrie donnée centrée sur une valeur.

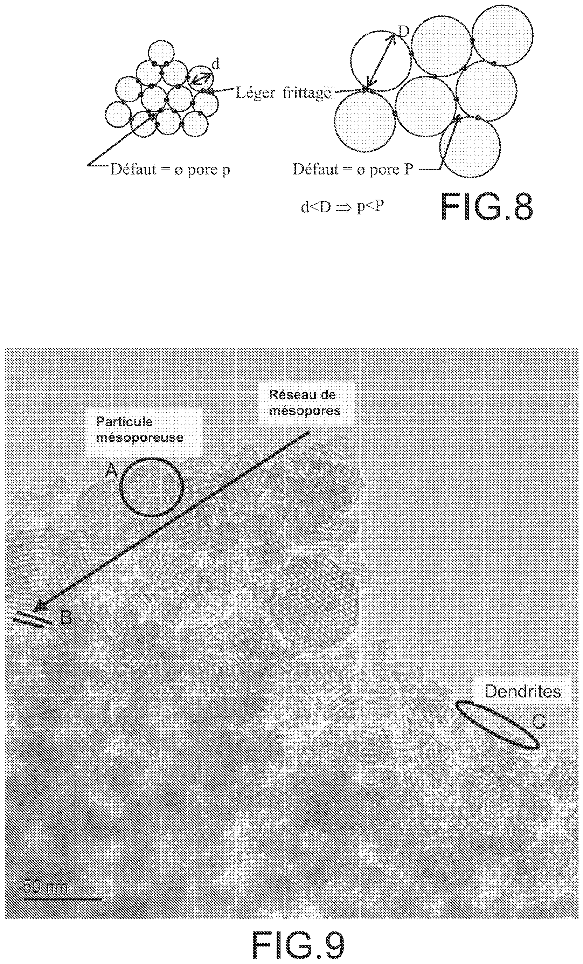

La figure 8 illustre la structure de deux dépôts réalisés à partir de particules sphériques de tailles différentes.

Les défauts d'empilement peuvent être amplifiés en utilisant un mélange de sol(s) de granulométries différentes dans des proportions proches (c'est-à-dire que, par exemple, dans le cas d'un mélange de deux sols, la différence dans les proportions en volume entre les deux constituants n'excède pas 10% en volume), voire identiques. Le diamètre des pores peut ainsi être augmenté dans la membrane.

Ainsi, sur la figure 8 (à gauche), on a montré la réalisation d'une membrane de porométrie faible à savoir par exemple centrée sur 10 nm (diamètre de pore p = taille du défaut d'empilement), avec des particules d'un diamètre d faible par exemple de 25 à 35 nm.

Si l'on utilise un sol de granulométrie plus grande par exemple avec des particules d'un diamètre D de 50 à 60 nm comme cela est représenté sur le schéma de droite de la figure 8, alors la taille des défauts d'empilement, et donc le diamètre des pores (P) seront également accrus et seront par exemple de 30 nm.

Sur la figure 8, on a donc d<D et par voie de conséquence p<P.

Sur la figure 8, on a également représenté le léger frittage, obtenu par le procédé selon l'invention, qui existe aux points de contact entre les particules du dépôt.

Ce léger frittage est obtenu du fait des conditions mises en oeuvre généralement dans le procédé de l'invention.

Par ailleurs, une porométrie bi-modale (centrée sur deux valeurs) peut être obtenue en utilisant dans le procédé de projection de sol des particules mésoporeuses. La porosité globale du matériau est réalisée par les défauts d'empilement et la porosité intrinsèque aux nanoparticules. Les deux étant découplés, deux gammes de pores sont obtenues.

La morphologie des particules joue un rôle important : la forme des nanoparticules conditionne non seulement le diamètre des pores mais aussi leur forme. En modifiant cette dernière, on peut agir sur la tortuosité du matériau poreux et ainsi augmenter ou diminuer la perméance de la membrane. Ainsi, les nanoparticules peuvent avoir outre une forme de sphères ou une forme de cube, d'hexaèdre ou toute autre forme cristalline pouvant être obtenue par un procédé sol-gel.

Les définitions, ainsi que les conditions opératoires générales et préférées du procédé de l'invention sont exposées ci-après.

Selon l'invention, le substrat peut être organique, inorganique ou mixte (c'est-à-dire organique et inorganique sur une même surface). De préférence il supporte les conditions opératoires du procédé de l'invention. Il peut être constitué par exemple d'un matériau choisi parmi les semiconducteurs tels que le silicium ; les polymères organiques tels que le poly(méthacrylate de méthyle) (PMMA), le polycarbonate (PC), le polystyrène (PS), le polypropylène (PP) et le poly (chlorure de vinyle) (PVC) ; les métaux tels que l'or, l'aluminium et l'argent ; les verres ; les oxydes minéraux , par exemple en couche, tels que $SiO_2$, $Al_2O_3$, $ZrO_2$, $TiO_2$, $Ta_2O_5$, MgO, etc. ; et les matériaux composites ou mixtes comprenant plusieurs de ces matériaux.

Selon l'invention, la préparation de la couche nanoporeuse de nanoparticules en d'autres termes, la mise en forme de la membrane peut être réalisée sur une multitude de supports, substrats, la température de dépôt étant contrôlée. Cela autorise le choix de supports, substrats thermosensibles, de supports, substrats métalliques, de supports, substrats céramiques, ce qui permet de réduire les coûts globaux de production de la membrane, sélective, supportée.

La couche nanoporeuse peut être déposée sous une grande varité de formes, en particulier sur toutes sortes de surfaces convexes et/ou concaves et sur les surfaces de cavités internes à des pièces, à la condition que ces cavités puissent recevoir le dispositif de projection thermique.

La surface du substrat que l'on souhaite revêtir sera éventuellement nettoyée afin d'éliminer les contaminants organiques et/ou inorganiques qui pourraient empêcher le dépôt, voire la fixation, du revêtement sur la surface, et d'améliorer l'adhérence du revêtement. Le nettoyage utilisé dépend de la nature du substrat et peut être choisi parmi les procédés physiques, chimiques ou mécaniques connus de l'homme du métier. Par exemple, et de manière non limitative, le procédé de nettoyage peut être choisi parmi l'immersion dans un solvant organique et/ou le nettoyage lessiviel et/ou le décapage acide assistés par les ultrasons ; ces nettoyages étant suivis éventuellement d'un rinçage à l'eau de ville, puis d'un rinçage à l'eau désionisée ; ces rinçages étant suivis éventuellement d'un séchage par « lift-out », par une pulvérisation d'alcool, par un jet d'air comprimé, à l'air chaud, ou par les rayons infrarouges. Le nettoyage peut être aussi un nettoyage par les rayons ultraviolets.

Par « nanoparticules », on entend des particules de taille nanométrique, allant généralement de 1 nm à quelques centaines de nanomètres, à savoir généralement de 1 à 500 nm, de préférence de 1 à 100, de préférence encore de 1 à 50 nm, mieux de 2 à 40 nm, mieux encore de 5 à 30 nm, encore mieux de 10 à 20 nm. On utilise également le terme « particules ». La granulométrie de la solution injectée dans le plasma peut être centrée sur un seul pic (monodispersée) ou plusieurs pics. La taille moyenne des pores de la membrane est contrôlée par la granulométrie des particules constituant le sol.

La porométrie de la couche ou membrane nanoporeuse peut ainsi être facilement réglée à une valeur déterminée. La porométrie de la membrane, couche nanoporeuse, est ainsi généralement de 1 à 500 nm, de préférence de 1 à 100 nm, de préférence encore de 1 à 50 nm, mieux de 2 à 40 nm, mieux encore de 5 à 30 nm, encore mieux de 10 à 20 nm.

Par ailleurs, la taille des pores est relativement peu dispersée par rapport à sa valeur moyenne. Cela constitue un avantage pour l'ultrafiltration, puisque les membranes sont qualifiées par le pore traversant le plus gros de la membrane. Le taux de porosité obtenu peut être supérieur ou égal à 20%, de préférence supérieur ou égal à 50%. Cette valeur est relativement élevée pour un matériau poreux céramique mise en oeuvre par projection plasma. Elle indique que la membrane est très perméable, que sa perte de charge intrinsèque est faible. Par exemple pour les membranes alumine/silice de 50 $\mu m$ d'épaisseur, les niveaux de perméance varient entre 200 et 1300 NL/min/bar/$m^2$ selon la taille des pores.

Un « procédé sol-gel » signifie une série de réactions où des espèces métalliques solubles s'hydrolysent pour former un hydroxyde de métal. Le procédé sol-gel met en jeu une hydrolyse-condensation de précurseurs métalliques (sels et/ou alcoxydes) permettant une stabilisation et une dispersion aisées de particules dans un milieu de croissance.

Le « sol » est un système colloïdal dont le milieu de dispersion est un liquide et la phase dispersée un solide. Le sol est également appelé « solution sol-gel colloïdale » ou « sol colloïdal ». Les nanoparticules sont dispersées et stabilisées grâce à un effet électrostatique (charge des particules) ou un effet stérique (enrobage polymérique par exemple).

Selon l'invention, le sol peut être préparé par tout procédé connu de l'homme du métier. On préfèrera bien entendu les procédés qui permettent d'obtenir une plus grande homogénéité de taille des nanoparticules, ainsi qu'une plus grande stabilisation et dispersion des nanoparticules. Les procédés de préparation de la solution sol-gel colloïdale décrits ici incluent les différents procédés classiques de synthèse de nanoparticules dispersées et stabilisées en milieu liquide.

Le sol peut être préparé par exemple par précipitation en milieu aqueux ou par synthèse sol-gel en milieu organique à partir d'un précurseur de nanoparticules.

On peut également préparer un tel sol par simple addition d'une poudre de nanoparticules à un solvant ou bien on peut préparer un sol de type mixte en ajoutant une poudre ou plusieurs poudres de nanoparticules par exemple monodisperse à un sol préparé par l'un des procédés décrits dans la présente.

Lorsque le sol est préparé par précipitation en milieu aqueux à partir d'un précurseur de nanoparticules, la préparation peut comprendre, par exemple, les étapes suivantes :

- étape 1 : synthèse hydrothermale des nanoparticules par utilisation d'un autoclave à partir de précurseurs métalliques ou synthèse des nanoparticules par co-précipitation à pression ordinaire ;
- étape 2 : traitement des nanoparticules (poudre), dispersion et stabilisation des nanoparticules en milieu aqueux (lavages, dialyses) ;
- étape 3 (facultative) : modification du solvant de stabilisation : dialyse, distillation, mélange de solvant ;
- étape 4 : (facultative) : dispersion des nanoparticules dans un milieu organique pour former un sol hybride organique-inorganique par dispersion des particules au sein d'un polymère ou oligomère organique et/ou par fonctionnalisation de la surface des particules par tout type de fonctions organiques réactives ou non.

Les nanoparticules préparées par ce procédé sont généralement des particules d'oxyde(s) de métal (métaux).

Les documents [8], [9] décrivent des exemples de cette voie de préparation par précipitation en milieu aqueux, avec différents précurseurs (sels de métalloïde, sels de métaux, alcoxydes métalliques), utilisables pour la mise en oeuvre de la présente invention.

Lorsque le sol est préparé par synthèse sol-gel en milieu organique à partir d'un précurseur de nanoparticules, la préparation peut comprendre, par exemple, la succession d'étapes suivantes :

- étape (a) : hydrolyse-condensation de précurseurs organométalliques ou de sels métalliques en milieu organique ou hydroalcoolique ;
- étape (b) : nucléation des nanoparticules stabilisées et dispersées en milieu organique ou hydroalcoolique par mûrissement, croissance ;
- étape (c) (facultative) : formation d'un sol hybride organique-inorganique par dispersion des particules au sein d'un polymère ou oligomère organique et/ou par fonctionnalisation de la surface des particules par tout type de fonctions organiques réactives ou non.

Les nanoparticules préparées par ce procédé sont généralement des particules d'oxyde(s) de métal (métaux).

Le document [10] décrit des exemples de cette voie de préparation par synthèse sol-gel en milieu organique, avec différents précurseurs (sels de métalloïde, sels de métaux, alcoxydes métalliques), utilisable dans la présente invention.

Ainsi, comme exposé ci-dessus, les nanoparticules peuvent directement être stabilisées dans le solvant utilisé au cours de la synthèse ou peptisées ultérieurement si elles sont synthétisées par précipitation. Dans les deux cas la suspension obtenue est un sol.

Quelle que soit la voie de préparation choisie, selon l'invention, le précurseur de nanoparticules est typiquement choisi dans le groupe comprenant un sel de métalloïde, un sel de métal, un alcoxyde métallique, ou un mélange de ceux-ci. Les documents précités illustrent cet aspect technique.

Par exemple, le métal ou métalloïde du sel ou de l'alcoxyde précurseur de nanoparticules peut être choisi par exemple dans le groupe comprenant le silicium, le titane, le zirconium, le hafnium, l'aluminium, le tantale, le niobium, le cérium, le nickel, le fer, le zinc, le chrome, le magnésium, le cobalt, le vanadium, le baryum, le strontium, l'étain, le scandium, l'indium, le plomb, l'yttrium, le tungstène, le manganèse, l'or, l'argent, le platine, le palladium, le nickel, le cuivre, le cobalt, le ruthénium, le rhodium, l'europium et les autres terres rares.

Le sol peut aussi être préparé en préparant un mélange de nanoparticules dispersées dans un solvant, chaque famille pouvant être issue des préparations décrites dans les documents [8], [9], [10].

Quelle que soit la variante d'obtention du sol utilisée, dans le procédé de l'invention, on peut bien entendu utiliser un mélange de différents sols qui diffèrent par leur nature chimique et/ou par leur procédé d'obtention et/ou leur granulométrie et/ou leurs solvants et/ou la structure des nanoparticules (celles-ci étant denses ou intrinsèquement nanoporeuses).

Les nanoparticules du sol mis en oeuvre dans le procédé selon l'invention sont choisies parmi les nanoparticules d'oxyde métallique (l'oxyde étant simple ou mixte), les nanoparticules d'oxydes métalliques (mélange de plusieurs oxydes) ; et les mélanges de celles-ci.

Le ou les oxydes métalliques peuvent être choisis parmi $SiO_2$, $ZrO_2$, $TiO_2$, $Ta_2O_5$, $HfO_2$, $ThO_2$, $SnO_2$, $VO_2$, $In_2O_3$, $Sb_2O_3$, $CeO_2$, $ZnO$, $Nb_2O_5$, $V_2O_5$, $Al_2O_3$, $SC_2O_3$, $Ce_2O_3$, $NiO$, $MgO$, $Y_2O_3$, $WO_3$, $BaTiO_3$, $Fe_2O_3$, $Fe_3O_4$, $Sr_2O_3$, $(PbZr)TiO_3$, $(BaSr)TiO_3$, $Co_2O_3$, $Cr_2O_3$, $Mn_2O_3$, $Mn_3O_4$, $Cr_3O_4$, $MnO_2$, $RuO_2$ et en conséquence, le sol utilisé dans le procédé de la présente invention pourra comprendre par exemple des nanoparticules d'un oxyde métallique choisi dans le groupe comprenant $SiO_2$, $ZrO_2$, $TiO_2$, $Ta_2O_5$, $HfO_2$, $ThO_2$, $SnO_2$, $VO_2$, $In_2O_3$, $Sb_2O_3$, $CeO_2$, $ZnO$, $Nb_2O_5$, $V_2O_5$, $Al_2O_3$, $Sc_2O_3$, $Ce_2O_3$, $NiO$, $MgO$, $Y_2O_3$, $WO_3$, $BaTiO_3$, $Fe_2O_3$, $Fe_3O_4$, $Sr_2O_3$, $(PbZr)TiO_3$, $(BaSr)TiO_3$, $Co_2O_3$, $Cr_2O_3$, $Mn_2O_3$, $Mn_3O_4$,

$Cr_3O_4$, $MnO_2$, $RuO_2$ ou d'une combinaison de ces oxydes, par exemple par dopage des particules ou par mélange des particules.

Cette liste n'est bien entendu pas exhaustive puisqu'elle inclut tous les oxydes métalliques décrits dans les documents précités.

Les sols selon l'invention peuvent être décrit comme étant les sols de nanoparticules céramiques. En particulier, on utilisera les sols de nanoparticules d'oxyde(s) métallique(s) tels que la zircone, l'alumine, la silice, l'oxyde d'hafnium (hafnine), le dioxyde de titane, etc..., les particules étant denses, poreuses, microporeuses, macroporeuses ou mésoporeuses.

La taille des nanoparticules du sol obtenu est parfaitement contrôlée par ses conditions de synthèse, en particulier par la nature des précurseurs utilisés, du ou des solvant(s), du pH, de la température, etc. et peut aller de quelques angströms à quelques microns. Ce contrôle de la taille des particules dans la préparation des sol est décrit par exemple dans le document [12].

Selon l'invention, par exemple dans les applications mentionnées dans la présente, les nanoparticules ont généralement une taille de 1 à 500 nm, de préférence de 1 à 100 nm, de préférence encore de 1 à 50 nm, mieux de 2 à 40 nm, mieux encore de 5 à 30 nm, encore mieux de 10 à 20 nm, ceci notamment dans le but de pouvoir réaliser des couches ou revêtements nanoporeux encore appelées membranes minces ou nanoporeuses, par exemple d'épaisseur allant de 0,1 $\mu$m à plusieurs millimètres par exemple 5 mm, de préférence 0,1 $\mu$m à 500 $\mu$m par exemple de 1 à 100 $\mu$m, mieux 2 à 50 $\mu$m.

Généralement, cependant, les couches selon l'invention ont une épaisseur supérieure ou égale à 10 $\mu$m, mieux supérieure à 10 $\mu$m et jusqu'à 20, 50, 100, 200, 500 ou 1000 $\mu$m.

A côté des nanoparticules, le sol comprend également un liquide porteur, qui provient de son procédé de fabrication, appelé milieu de croissance. Ce liquide porteur est un solvant organique ou inorganique tels que ceux décrit dans les documents précités. Il peut s'agir par exemple d'un liquide choisi parmi les alcools. Le pH de ce liquide porteur dépend du procédé de fabrication du sol et de sa nature chimique. Il est généralement de 1 à 14.

La rhéologie du sol peut être ajustée pour être compatible avec le système d'injection. Le taux de charge, défini par le rapport des masses entre le solide et le solvant doit de préférence rester suffisamment bas pour ne pas rendre la solution trop visqueuse. Le taux de charge varie généralement de 1 à 30% en masse, de préférence de 1 à 10% en masse.

Dans les sols obtenus, les nanoparticules sont dispersées et stabilisées dans leur milieu de croissance, et cette stabilisation et/ou dispersion peut être favorisée par le procédé de préparation du sol et par la chimie utilisée (voir ci-dessus). Le procédé de la présente invention tire partie de cette propriété des sols.

Selon l'invention, le sol peut comprendre en outre des molécules organiques. Il peut s'agir par exemple de molécules de stabilisation des nanoparticules dans le sol (toutefois dans les sols mis en oeuvre selon l'invention les nanoparticules sont généralement auto-stabilisées et l'addition de molécules de stabilisation n'est donc pas généralement nécessaire) et/ou de molécules qui fonctionnalisent les nanoparticules. Il peut s'agir aussi de molécules texturantes ou polymères destinées à conférer une porosité, de préférence une mésoporosité aux particules.

En effet, un composé organique peut être ajouté aux nanoparticules afin de leur conférer une propriété particulière. Par exemple, la stabilisation de ces nanoparticules en milieu liquide par effet stérique conduit à des matériaux appelés matériaux hybrides organiques-inorganiques de classe I. Les interactions qui régissent la stabilisation de ces particules sont faibles de nature électrostatique de type liaisons hydrogènes ou de Van Der Waals. De tels composés utilisables dans la présente invention, et leur effet sur les sols, sont décrits par exemple dans le document [13].

Egalement, selon l'invention, les particules peuvent être fonctionnalisées par un composé organique soit au cours de la synthèse par introduction de précurseurs organominéraux adéquates, soit par greffage sur la surface des colloïdes. Des exemples ont été donnés ci-dessus. Ces matériaux sont alors appelés matériaux organiques-inorganiques de classe II puisque les interactions présentes entre la composante organique et la particule minérale sont fortes, de nature covalente ou ionocovalente. De tels matériaux et leur procédé d'obtention sont décrits dans le document [13].

Les propriétés des matériaux hybrides utilisables dans la présente invention dépendent non seulement de la nature chimique des composantes organiques et inorganiques utilisées pour constituer le sol, mais également de la synergie qui peut apparaître entre ces deux chimies. Le document [13] décrit les effets de la nature chimique des composantes organiques et inorganiques utilisées et de telles synergies.

Les nanoparticules du sol peuvent être des nanoparticules denses (à savoir non poreuses) ou bien des nanoparticules intrinsèquement poreuses, microporeuses, macroporeuses, ou de préférence mésoporeuses, ou mésostructurées.

Selon un mode de réalisation particulièrement intéressant de la présente invention tout ou partie des nanoparticules du sol sont des nanoparticules intrinsèquement poreuses, microporeuses, macroporeuses, mésoporeuses ou mésostructurées. De préférence, tout ou partie des particules sont mésoporeuses ou mésostructurées.

En effet, le procédé sol-gel offre également des stratégies innovantes dans la construction de matériaux mésoporeux en particulier mésoporeux organisés.

Ces matériaux mésoporeux sont des solides qui présentent au sein de leur structure des pores possédant une taille intermédiaire entre celle des micropores (composés de type zéolites) et celles des pores macroscopiques (2 nm<$d_{pore}$<50 nm). Ces pores peuvent être organisés selon une structure périodique ou quasi-périodique, ces matériaux sont alors appelés mésostructurés.

Ainsi, les nanoparticules intrinsèquement mésoporeuses peuvent être synthétisées par le procédé suivant :

- synthèse sol-gel de nanoparticules intrinsèquement mésoporeuses :

→ étape 1 : hydrolyse-condensation de précurseurs organométalliques ou de sels métalliques en présence d'agent texturant ou porogène.
→ étape 2 : nucléation des nanoparticules stabilisées et dispersées en milieu organique ou en milieu aqueux par mûrissement, croissance.
→ étape 3 (facultative) : Elimination de l'agent texturant ou porogène par dialyse, lavage ou calcination.

Il est à noter que ces particules intrinsèquement mésoporeuses et/ou mésotructurées sont généralement des particules d'oxyde(s) métallique(s).

Par exemple, l'élaboration de ces matériaux mésoporeux peut être réalisée par polymérisation inorganique au sein de systèmes moléculaires organisés (SMO) de tensioactifs ou au sein de systèmes polymériques organisés (SPO) de copolymères à blocs. En présence de ces agents texturants, cette chimie douce permet également de synthétiser, à partir de précurseurs inorganiques et organométalliques, des nanoparticules d'oxyde métallique qui sont intrinsèquement mésostructurées.

Il est également possible que les particules contenues dans le sol projeté soient des particules denses, mésoporeuses et soient associées ou non à un agent texturant ou porogène tel que par exemple un tensioactif.

Le procédé de l'invention comprend l'injection d'au moins un sol colloïdal dans un jet ou écoulement de plasma thermique. L'injection du sol dans le jet de plasma peut être réalisée par tout moyen approprié d'injection d'un liquide, par exemple au moyen d'un injecteur, par exemple sous forme de jet ou de gouttes, de préférence avec une quantité de mouvement adaptée pour qu'elle soit sensiblement identique à celle de l'écoulement plasma. Des exemples d'injecteurs sont donnés ci-dessous.

Selon l'invention, on peut injecter un seul sol dans le plasma, ce sol pouvant être un sol pur ou bien un sol contenant des particules différentes quant à leur composition chimique, et/ou leur granulométrie et/ou leur structure interne (dense ou poreuse).

Un tel sol pourra par exemple comprendre des particules d'oxyde(s) métallique(s) lesdites particules pouvant être des particules denses et/ou des particules mésoporeuses, ces différentes particules ayant des granulométries identiques ou différentes.

Il est également possible d'injecter plusieurs sols dans le plasma simultanément ou non : en d'autres termes, il est possible de multiplier les points d'injection dans le plasma ce qui autorise une grande variété de combinaisons en ce qui concerne notamment la nature des matériaux projetés, leur granulométrie et leur structure dense ou poreuse. De ce fait, la porosité et la composition de la ou des couche(s) déposée(s) peut être également parfaitement maîtrisée.

Chacun de ces sols peut être un sol « pur » ou un sol « mixte » et différer notamment quant à sa composition chimique, et/ou sa granulométrie et/ou sa structure interne (porosité par exemple mésoporosité intrinsèque, particules denses), et/ou son solvant et/ou la nature des divers additifs inclus dans les différents sols.

En outre, il est possible d'injecter dans le plasma simultanément ou non au (x) sol (s) une ou plusieurs poudres nanométriques « sèches ». Lesdites poudres peuvent avoir une composition analogue à celle des nanoparticules des sols décrits ci-dessus, et comprendre par exemple un ou plusieurs oxyde(s) métallique(s).

La projection thermique simultanée ou non de sols et/ou de sols mixtes et éventuellement en outre de poudres nanométriques permet d'obtenir des matériaux nanoporeux dont la taille des pores, appelée porométrie est parfaitement maîtrisée contrôlée et notamment dans le cadre de la réalisation d'une membrane nanoporeuse.

Si l'on utilise en outre des nanoparticules poreuses, par exemple mésoporeuses ou mésostructurées, on obtiendra ainsi un matériau portant au moins une double échelle un degré de porosité dans chaque couche.

La température du sol lors de son injection peut aller par exemple de la température ambiante (20°C) jusqu'à une température inférieure à son ébullition. Avantageusement, on peut contrôler et modifier la température du sol pour son injection, par exemple pour être de 0°C à 100°C. Le sol possède alors une tension de surface différente, selon la température imposée, entraînant un mécanisme de fragmentation plus ou moins rapide et efficace lorsqu'il arrive dans le plasma. La température peut donc avoir un effet sur la qualité du revêtement obtenu.

Le sol injecté, par exemple sous forme de gouttes, pénètre dans le jet de plasma, où il est explosé en une multitude de gouttelettes sous l'effet des forces de cisaillement du plasma. La taille de ces gouttelettes peut être ajustée, selon la microstructure recherchée du dépôt, en fonction des propriétés du sol (liquide) et de l'écoulement plasma. Avantageusement, la taille des gouttelettes varie de 0,1 à 10 $\mu$m.

Les énergies cinétique et thermique du jet de plasma servent respectivement à disperser les gouttes en une multitude de gouttelettes (fragmentation), puis à vaporiser le liquide. Quand le sol liquide atteint le coeur du jet, qui est un milieu à haute température et haute vitesse, il est vaporisé et les nanoparticules sont accélérées pour être recueillies sur le substrat pour former un dépôt (revêtement) nanostructuré possédant une structure cristalline identique à celle des particules initialement présentes dans le sol de départ. La vaporisation du liquide entraîne le rapprochement des nanoparticules fines de matière appartenant à une même gouttelette et leur agglomération. Les agglomérats résultants, généralement de taille inférieure à 1 μm, se retrouvent au coeur du plasma où ils sont fondus, partiellement ou totalement, puis accélérés avant d'être recueillis sur le substrat. Si la fusion des agglomérats est complète, la taille des grains dans le dépôt est de quelques centaines de nanomètres à quelques microns. En revanche, si la fusion n'est que partielle, la taille des grains dans le dépôt est proche de celle des particules contenues dans le liquide de départ et les propriétés cristallines des particules sont bien conservées au sein du dépôt.

Généralement, les plasmas thermiques sont des plasmas produisant un jet ayant une température de 5000 K à 15000 K. Dans la mise en oeuvre du procédé de l'invention, cette fourchette de température est préférée. Bien entendu, la température du plasma utilisé pour la projection du sol sur la surface à revêtir peut être différente. Elle sera choisie en fonction de la nature chimique du sol et du revêtement souhaité. Selon l'invention, la température sera choisie de manière à se placer préférentiellement dans une configuration de fusion partielle ou totale des particules du sol, de préférence de fusion partielle pour conserver au mieux leurs propriétés de départ au sein de la couche.

Le plasma peut être par exemple un plasma d'arc, soufflé ou non, ou un plasma inductif ou radiofréquence, par exemple en mode supersonique. Il peut fonctionner à la pression atmosphérique ou à plus basse pression. Les documents [14], [15] et [16] décrivent des plasmas utilisables dans la présente invention, et les torches à plasma permettant de les générer. Avantageusement, la torche à plasma utilisée est une torche à plasma d'arc.

Selon l'invention, le jet de plasma peut être généré avantageusement à partir d'un gaz plasmagène choisi dans le groupe comprenant Ar, $H_2$, He et $N_2$. Avantageusement, le jet de plasma constituant le jet a une viscosité de $10^{-4}$ à $5 \times 10^{-4}$ kg/m.s. Avantageusement, le jet de plasma est un jet de plasma d'arc.

Le substrat à revêtir est, pour des raisons évidentes, préférentiellement positionné par rapport au jet plasma pour que la projection des nanoparticules soit dirigée sur la surface à revêtir. Différents essais permettent très facilement de trouver une position optimale. Le positionnement est ajusté pour chaque application, selon les conditions de projection sélectionnées et la microstructure du dépôt souhaitée.

La vitesse de croissance des dépôts, élevée pour un procédé de fabrication de couches finement structurées, dépend essentiellement du pourcentage massique de matière dans le liquide et du débit de liquide. Avec le procédé de l'invention, on peut aisément obtenir une vitesse de dépôt du revêtement de nanoparticules de 1 à 100 μm/min.

Les couches ou revêtements nanoporeux minces, membranes, qui peuvent être obtenus par le procédé de l'invention, allant aisément généralement de 1 à 100 μm par exemple de 10 à 100 μm, mieux de plus de 10 à 20, 50 ou 100 μm peuvent être constitués de grains de taille inférieure ou de l'ordre du micron. Elles peuvent être pures et homogènes. La synthèse d'une solution sol-gel stable et homogène de nanoparticules de granulométrie définie associée au procédé liquide de projection plasma de l'invention permet de conserver les propriétés intrinsèques du sol de départ au sein du dépôt et d'obtenir un revêtement nanostructuré en maîtrisant avantageusement les propriétés suivantes : porosité/densité ; homogénéité en composition ; stoechiométrie « exotique » (sols mixtes et mélanges précités) ; structure nanométrique (taille et phases cristallines) ; granulométrie des grains ; épaisseur du dépôt homogène sur objet à forme complexe ; possibilité de dépôt sur tout type de substrats, quelles que soient leur nature et leur rugosité.

Le procédé selon l'invention peut être mis en oeuvre une seule fois, c'est-à-dire que l'on dépose une seule couche, par exemple, une membrane formée à la surface du substrat.

Le procédé de l'invention peut être mis en oeuvre plusieurs fois sur une même surface de substrat, avec différents sols et éventuellement une ou plusieurs poudres nanométriques sèches - lesdits sols étant différents en composition et/ou en concentration et/ou en taille de particules et/ou en structure des particules (denses ou poreuses par exemple mésoporeuses) - pour réaliser des couches successives de différentes compositions et/ou des dépôts de différentes porométries/porosités par exemple avec des gradients de porosité avec de grandes surfaces d'échange. Ces dépôts de couches successives sont utiles par exemple dans les couches à porosité contrôlée.

Les couches successives peuvent avoir la même épaisseur ou bien des épaisseurs différentes. Dans le cas de tels empilements, seule la couche supérieure est généralement appelée membrane.

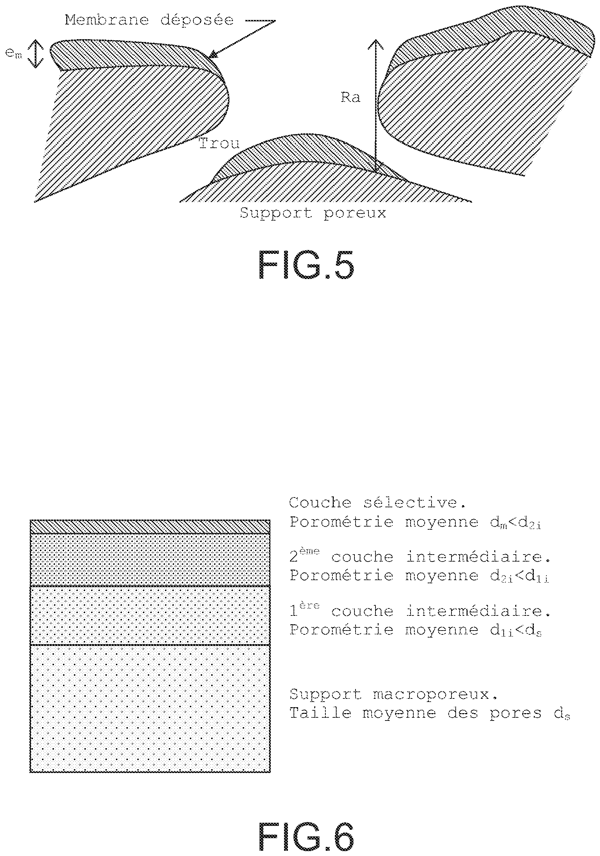

Du fait que la membrane nanoporeuse préparée par le procédé selon l'invention est d'une épaisseur très fine par exemple de 1 à 100 μm pour permettre une perméance élevée, doit généralement être structurée mécaniquement par un matériau épais et perméable. L'épaisseur de ce dernier matériau est fonction de la pression de fonctionnement de la membrane. Elle est généralement de un à quelques millimètre. Ce substrat, support structurant ayant une taille de pores très élevée, sa rugosité de surface peut être importante. Si celle-ci (Ra) est plus importante que l'épaisseur de la membrane nanoporeuse déposée ($e_m$), cette membrane nanoporeuse risque de présenter des trous comme le détaille la figure 5. Afin de réduire la rugosité, un polissage peut être opéré. L'insertion entre le structurant nanoporeux et la couche nanoporeuse sélective d'une ou plusieurs couches adaptatrices à porométrie intermédiaires $P_{1i}$, $P_{2i}$, ..., $P_{ni}$ peut-être également utilisée. On obtient alors un gradient de porométrie dans le sens de l'épaisseur. Ce système est détaillé figure 6. Ces couches sont déposées par projection thermique de sol ou d'un mélange de sol et de poudre. Elles sont suffisamment perméables afin de conférer à l'empilement (membrane sélective/couches intermédiaires/support poreux) une perméance élevée.

En d'autres termes, le substrat est constitué par un support poreux de porométrie $d_s$ sur lequel on dépose une ou plusieurs (n) couches intermédiaires 1i, 2i, ni de porométries moyennes $d_{1i}$, $d_{2i}$, ..., dni, décroissantes $d_{ni}$ <$d_{2i}$ <$d_{1i}$ <$d_s$, par un procédé de projection d'un sol ou d'un mélange de sol (s) et de poudre(s) nanométrique(s), et l'on dépose finalement une couche nanoporeuse qui a une porométrie moyenne dm<$d_{ni}$ sur la dernière couche intermédiaire.

L'épaisseur de la membrane est contrôlée finement ($\pm 2\,\mu$m) grâce à la très faible épaisseur de couches déposées à chaque passage de la torche (inférieure à 1 $\mu$m ou à quelques microns). Par ailleurs la réalisation de la membrane par empilement successif d'une multitude de couches très fines confère à celle-ci des garanties en terme d'homogénéité et d'absence de défauts traversants.

A l'issue de sa préparation, ladite (lesdites) couche(s) nanoporeuse(s) de particules est (sont) fonctionnalisée(s) en totalité ou en partie afin par exemple de lui (leur) conférer une sélectivité vis-à-vis d'un fluide.

La fonctionnalisation de la surface par greffage covalent par exemple de molécules hydrophobes (de type perfluoré ou alkyle par exemple) est réalisée dans le cas de l'utilisation de la membrane pour la séparation de phase (eau et air par exemple). La membrane n'est plus mouillée par l'un des fluides ; il est bloqué en surface, alors que l'autre phase traverse la membrane. Néanmoins la taille des pores de la membrane doit être suffisamment petite pour pouvoir bloquer une des phases à la vue de la loi de Jurin-Washburn énoncée ci-dessous.

$$P_g = \frac{2\gamma \cos(\theta)}{r}$$

Avec Pg la pression de goutte définie par la pression à appliquée pour faire traverser la membrane par le fluide, y la tension superficielle entre les deux phases à séparer, $\theta$ l'angle de goutte entre la phase retenue et la membrane et r le rayon du pore le plus gros de la couche nanoporeuse.

En outre, selon l'invention il est possible de fonctionnaliser de manière différente, spécifique, différentes surfaces zones poreuses de la ou des couches, membranes, ce qui permet d'utiliser ces membranes en rétention sélective. De même, dans le cas de plusieurs couches, on peut fonctionnaliser de manière différente chaque couche.

Le procédé de projection de la présente invention est facilement industrialisable puisque sa spécificité réside notamment dans le système d'injection qui peut s'adapter sur toutes machines de projection thermiques déjà présentes dans l'industrie ; dans la nature de la solution sol-gel ; et dans le choix des conditions plasma pour l'obtention d'un revêtement nanostructuré présentant les propriétés des particules projetées.

Un dispositif de revêtement d'une surface d'un substrat utilisable pour la mise en oeuvre du procédé de l'invention, peut comprendre les éléments suivants :

- une torche à plasma thermique capable de produire un jet de plasma ;
- un réservoir de gaz plasmagène ;
- un réservoir de sol colloïdal de nanoparticules ;
- un moyen de fixation et de déplacement du substrat par rapport à la torche à plasma ;
- un système d'injection reliant d'une part le réservoir de sol colloïdal et d'autre part un injecteur dont l'extrémité est microperforée d'un trou d'injection du sol colloïdal dans le jet de plasma généré par la torche à plasma ; et
- un mano-détendeur permettant d'ajuster la pression à l'intérieur du réservoir.

Avantageusement, la torche à plasma est capable de produire un jet de plasma ayant une température de 5000 K à 15000 K. Avantageusement, la torche à plasma est capable de produire un jet de plasma ayant une viscosité de $10^{-4}$ à $5\times10^{-4}$ kg/m.s. Avantageusement, la torche à plasma est une torche à plasma d'arc. Des exemples de gaz plasmagènes sont donnés ci-dessus, les réservoirs de ces gaz sont disponibles dans le commerce. Les raisons de ces choix avantageux sont exposées ci-dessus.

Avantageusement, le dispositif de l'invention comprend plusieurs réservoirs contenant respectivement plusieurs sols chargés de nanoparticules, les sols étant différents les uns des autres de par leur composition et/ou la taille diamètre des nanoparticules et/ou concentration. Le dispositif de l'invention peut comprendre en outre un réservoir de nettoyage contenant une solution de nettoyage de la tuyauterie et de l'injecteur. Ainsi, la tuyauterie et l'injecteur peuvent être nettoyés entre chaque mise en oeuvre du procédé.

Les réservoirs peuvent être reliés à un réseau d'air comprimé grâce à des tuyaux et à une source de gaz de compression, par exemple d'air comprimé. Un ou plusieurs mano-détendeur(s) permet(tent) d'ajuster la pression à l'intérieur du ou des réservoir(s). Celle-ci est fonction de la ligne d'injection, de la rhéologie du sol et des conditions plasma, et généralement inférieure à une pression de $2\times10^6$ Pa (20 bars) mais qui peut être supérieure. Dans ce cas, sous l'effet de la pression, le liquide est acheminé jusqu'à l'injecteur, ou les injecteurs s'il y en a plusieurs, par des tuyaux puis sort de l'injecteur, par exemple sous la forme d'un jet de liquide qui se fragmente mécaniquement sous la forme de grosses gouttes, de préférence de diamètre calibré, en moyenne deux fois supérieures au diamètre du trou circulaire de sortie. Une pompe est également utilisable. Le débit et la quantité de mouvement du sol en sortie de l'injecteur dépendent notamment :

- de la pression dans le réservoir utilisé et/ou de la pompe,
- des caractéristiques des dimensions de l'orifice de sortie (diamètre de profondeur), et
- des propriétés rhéologiques du sol.

L'injecteur permet d'injecter le sol dans le plasma. Il est de préférence tel que le sol injecté se fragmente mécaniquement en sortie de l'injecteur sous forme de gouttes comme indiqué ci-dessus. Selon l'invention, le trou de l'injecteur peut être de n'importe quelle forme permettant d'injecter le sol colloïdal dans le jet de plasma, de préférence dans les conditions précitées. Avantageusement, le trou est circulaire. Avantageusement le trou de l'injecteur a un diamètre de 10 à 500 $\mu$m. Selon l'invention, le dispositif peut être doté de plusieurs injecteurs, par exemple selon les quantités de sol à injecter.

Selon un mode particulier de réalisation du dispositif, l'inclinaison de l'injecteur par rapport à l'axe longitudinal du jet de plasma peut varier de 20 à 160°. Avantageusement également, l'injecteur peut être déplacé dans le sens longitudinal du jet de plasma. Ces déplacements sont indiqués schématiquement sur la figure 2 annexée. Ainsi, l'injection du sol colloïdal dans le jet de plasma peut être orientée. Cette orientation permet d'optimiser l'injection du sol colloïdal, et donc la formation du revêtement projeté sur la surface du substrat.

La ligne d'injection du sol peut être thermostatée de façon à contrôler et éventuellement modifier la température du sol injecté. Ce contrôle de la température et cette modification peuvent être réalisés au niveau des tuyaux et/ou au niveau des réservoirs.

Le dispositif peut également comprendre un ou plusieurs dispositifs permettant d'injecter des poudres de nanoparticules dans le plasma.

Le dispositif peut comprendre un moyen de fixation et de déplacement du substrat par rapport à la torche à plasma. Ce moyen peut consister en des pinces ou système équivalent permettant de saisir (fixer) le substrat et de le maintenir lors de la projection plasma en une position choisie, et en un moyen permettant de déplacer en rotation et en translation la surface du substrat face au jet de plasma et dans le sens longitudinal du jet de plasma. Ainsi, on peut optimiser la position de la surface à revêtir, par rapport au jet de plasma, pour obtenir un revêtement homogène.

De manière plus précise, un montage expérimental qui a permis de réaliser les dépôts nanostructurés des exemples est représenté sur les figures 1 et 2. Il est constitué :

- d'une torche à plasma (3) à courant continu Sulzer-Metco F4 VB (marque de commerce), munie d'une anode de diamètre interne 6 mm,
- du système d'injection de liquide décrit sur la figure 1, et
- d'un dispositif (9) permettant de fixer et de déplacer le substrat à revêtir par rapport à la torche à une distance donnée (figure 2).

Concernant le système d'injection, il comprend un réservoir (R) contenant le sol colloïdal (7) et un réservoir nettoyant (N), contenant un liquide de nettoyage (L) de l'injecteur et de la tuyauterie (v). Il comprend également des tuyaux (v) permettant d'acheminer les liquides des réservoirs vers l'injecteur (I), des manodétenteurs (m) permettant d'ajuster la pression dans les réservoirs (pression <2x10$^6$ Pa). L'ensemble est relié à un gaz de compression (G), ici de l'air, permettant de créer dans les tuyaux un réseau d'air comprimé. Sous l'effet de la pression, le liquide est acheminé jusqu'à l'injecteur.

Concernant l'injection de liquide, le diamètre de l'orifice de sortie (t) de l'injecteur (I) est par exemple de 105 $\mu$m et la pression dans le réservoir (R) contenant le sol est par exemple de 0,4 MPa, ce qui implique un débit de liquide de par exemple 20 ml/min et une vitesse par exemple de 16 m/s. Le sol sort de l'injecteur sous forme d'un jet de liquide qui se fragmente mécaniquement sous la forme de grosses gouttes de diamètre calibré allant par exemple de 2 $\mu$m à 1 mm, en moyenne deux fois supérieur au diamètre du trou circulaire de sortie. L'injecteur (figure 2) peut être incliné par rapport à l'axe du jet de plasma de par exemple 20 à 160°, par exemple encore 90°.

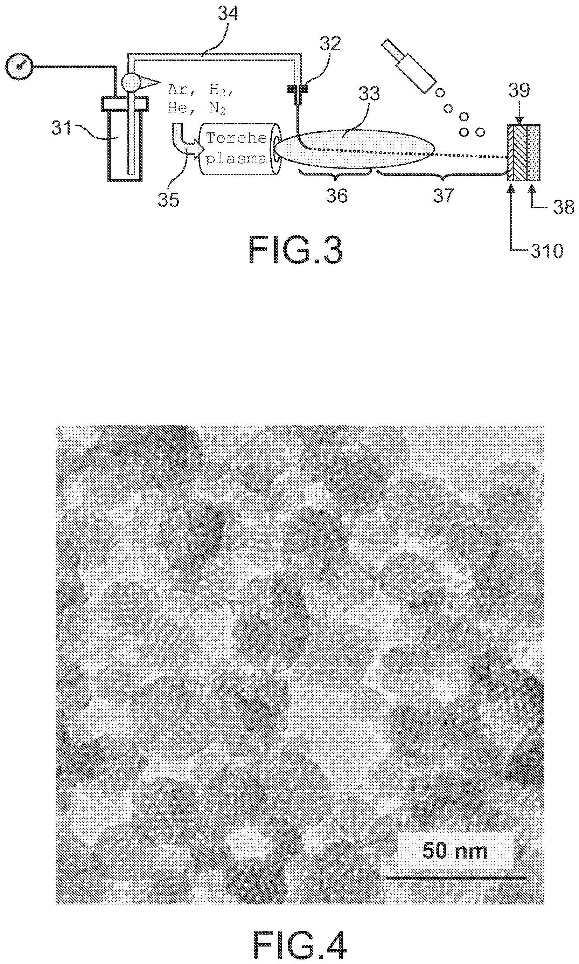

Un exemple de dispositif convenant pour la mise en oeuvre du procédé selon l'invention est également décrit sur la figure 3, il comprend un réservoir (31) de sol, suspension ou mélange qui alimente un injecteur (32) d'un diamètre calibré par exemple de 300 $\mu$m qui injecte ledit sol, sol mixte, suspension ou mélange dans un plasma (33) généré par une torche plasma (34) alimentée en gaz (35) tel que Ar, H$_2$, He, N$_2$.

Dans une première zone (36) se produit l'évaporation du solvant du sol, suspension ou mélange et dans une deuxième zone de traitement des nanoparticules (37) on effectue un refroidissement cryogénique des nanoparticules qui viennent se déposer sous la forme d'un dépôt nanostructuré sur un support poreux (38) doté d'une couche intermédiaire (39).

L'invention permet de réaliser une injection directe grâce à un système d'injection bien adapté, par exemple en utilisant le dispositif décrit ci-dessus, d'une suspension stable de nanoparticules, solution appelée « sol » puisqu'elle résulte de la synthèse d'un colloïde par procédé sol-gel mettant en jeu l'hydrolyse condensation de précurseurs métalliques (sels ou alcoxydes) permettant une stabilisation et une dispersion aisées de particules dans leur milieu de croissance.

Les avantages principaux de la présente invention par rapport aux procédés de l'art antérieur sont :

- la conservation de la taille et de la répartition granulométrique des nanoparticules ;
- la conservation de l'état cristallin du matériau projeté ;
- la conservation de la stoechiométrie initiale et de l'état d'homogénéité ;
- la réalisation d'un dépôt à forte porosité donc à perméance élevée ;
- le contrôle de la porosité du film ;
- l'accès à des épaisseurs de revêtements submicroniques sans aucune difficulté, contrairement au procédé de projection thermique classique de l'art antérieur ;
- l'obtention d'un excellent et inhabituel rendement pondéral de projection thermique en limitant les pertes de matière, c'est-à-dire un rapport de masse déposée/masse projetée, supérieur à 80% en poids ;
- la réduction des températures auxquelles sont soumis les matériaux projetés, autorisant ainsi l'utilisation de compositions sensibles thermiquement et de même, de substrats sensibles thermiquement ;
- la possibilité, aujourd'hui inédite, de réaliser des dépôts sur des supports de toute nature et de toute rugosité comme du verre ou des wafers de silicium polis miroir (sur ces derniers la très faible rugosité de surface des substrats interdisait l'adhérence des revêtements) ;
- la préparation de dépôts fonctionnalisables grâce au choix de la composition chimique projetée ; ce qui permet d'améliorer la sélectivité de la membrane ainsi obtenue ;
- la possibilité de déposer des particules de granulométrie différentes et/ou des particules intrinsèquement mésoporeuses ou mésostructurées. Ceci permet la réalisation de matériaux à gradients de porosité avec des grandes surfaces d'échanges utilisables en filtration multi-échelle (à plusieurs niveaux de filtration ou en rétention sélective) ;
- la capacité de réalisation par projection thermique de revêtements à composition $SiO_2$, composition jusqu'à présent inaccessible pour les procédés classiques ; et
- l'obtention de revêtements mécaniquement résistants et adhérents.

La présente invention trouve des applications dans tous les domaines techniques où il est nécessaire d'obtenir un revêtement nanoporeux, une membrane nanoporeuse d'une taille de pores calibrée et de perméance élevée. A titre d'exemples non exhaustifs, la présente invention peut être utilisée dans les applications suivantes :

- ultrafiltration,
- purification,
- séparation de gaz,
- séparation de différentes phases (par exemple eau-huile),
- catalyse hétérogène,
- réacteurs chimiques auto-supportés,
- diffusion gazeuse,
- capteurs ou préconcentrateurs.

La couche nanoporeuse préparée par le procédé de l'invention, c'est-à-dire présentant les caractéristiques physiques et chimiques des revêtements obtenus par le procédé de l'invention, peut être utilisée dans un dispositif d'ultrafiltration, de purification, de séparation de gaz, de séparation de phases, ou de catalyse hétérogène, dans un réacteur chimique auto-supporté, dans un dispositif de diffusion gazeuse, dans un capteur.

D'autres caractéristiques et avantages de l'invention pourront apparaître à la lecture des exemples suivants donnés à titre illustratif et non limitatif en référence aux dessins annexés.

## BRÈVE DESCRIPTION DES DESSINS

- La figure 1 présente un schéma simplifié d'une partie d'un dispositif de mise en oeuvre du procédé de l'invention permettant d'injecter le sol colloïdal de nanoparticules dans un jet de plasma.
- La figure 2 représente un schéma simplifié d'un mode d'injection d'un sol colloïdal de nanoparticules dans un jet de plasma avec une représentation schématique de la torche à plasma.
- La figure 3 représente une vue en coupe schématique d'un dispositif pour la mise en oeuvre du procédé selon l'invention.
- La figure 4 est une microphotographie obtenue en microscopie électronique en transmission d'un sol de silice mésoporeuse (exemple 3) qui est utilisé dans le procédé selon l'invention. L'échelle représentée sur la microphotographie est de 50 nm.
- La figure 5 est une vue schématique en coupe d'une membrane nanoporeuse déposée par le procédé de l'invention sur un support nanoporeux. L'épaisseur de la membrane déposée est $e_m$ et la rugosité de surface du support est $R_a$.
- La figure 6 est une vue schématique représentant une couche ou membrane selon l'invention déposée sur un support nanoporeux. Entre, le support nanoporeux et la membrane sont prévus une première couche intermédiaire et une seconde couche intermédiaire. La taille des pores du support nanoporeux est $d_s$. Les porométries moyennes de la première couche intermédiaire, de la seconde couche intermédiaire et de la membrane sont respectivement $d_{1i}$, $d_{2i}$ et $d_m$ avec $d_m < d_{2i} < d_{1i} < d_s$.
- La figure 7 est une microphotographie obtenue en microscopie électronique à balayage. Elle montre en coupe une membrane nanoporeuse, préparée par le procédé selon l'invention, composée d'un mélange d'alumine et de silice, supportée par un support tel que l'alumine/oxyde de titane poreux. L'échelle représentée sur la microphotographie est de 10 μm.

- La figure 8 est une vue schématique en coupe montrant la structure de l'empilement dans deux dépôts nanoporeux réalisés par projection de sol conformément au procédé de l'invention. Les deux dépôts sont réalisés à partir de particules sphériques de taille différente. Le schéma de gauche correspond notamment à un dépôt obtenu dans l'exemple 1 tandis que le schéma de droite correspond notamment à un dépôt obtenu dans l'exemple 2.

- La figure 9 est une micrographie obtenue en microscopie électronique en transmission sur une coupe d'un dépôt de silice mésoporeuse préparé sur une plaquette de silicium par projection plasma d'un sol aqueux de silice. L'échelle représentée sur la micrographie est de 50 nm. Sur cette figure la zone A représente une particule mésoporeuse, la zone B représente un réseau de mésopores et la zone C représente des dendrites.

Exemple 1 (comparatif) :

L'exemple 1 décrit la réalisation d'une membrane d'ultrafiltration sur des disques métalliques poreux d'épaisseur 2 mm.

Le support métallique choisi (PORAL C15 de FEDERAL MOGUL) est grossièrement poreux (diamètre moyen de pore d'environ 20 μm). La couche nanoporeuse sélective d'épaisseur 5 μm ne peut être déposée directement sur ce substrat. Une couche intermédiaire est alors mise en oeuvre à partir d'alumine de granulométrie 400 nm.

Une suspension aqueuse acide monodisperse d'alumine de granulométrie 400 nm est injectée dans un plasma d'arc soufflé d'argon/hydrogène (8% en volume d'H$_2$) au moyen d'un réservoir pressurisé à 3 bar. Le diamètre de sortie de l'injecteur utilisé est calibré à 200 μm. La torche plasma (F100 CONNEX de SULZER METCO) est fixée en regard d'un mandrin où sont positionnés les disques métalliques. Au cours de la projection, la torche se translate en aller-retour dans la direction de l'axe de rotation du mandrin afin de balayer la totalité de la surface des échantillons. Le dépôt ainsi formé a une épaisseur de 60 μm pour une porosité de 60% et un diamètre moyen de pore de 130 nm.

Un sol aqueux de silice à 5% de granulométrie 33 nm est injecté dans la zone chaude (8000 - 15000K) d'un plasma thermique dans les mêmes conditions et avec les mêmes moyens que la couche précédente. Un dépôt de 5 μm d'épaisseur, et de porométrie 10 nm est obtenu. Il correspond aux spécificités d'une membrane d'ultrafiltration. La perméance de l'empilement (support métallique/couche intermédiaire Al$_2$O$_3$/membrane sélective) est d'environ 1300 NL/min/bar/m$^2$. Cette valeur peut être augmentée en optimisant la couche intermédiaire.

Exemple 2 (comparatif) :

L'exemple 2 décrit la fabrication d'une membrane d'ultrafiltration sur support céramique.

Un substrat poreux d'alumine/oxyde de titane est préalablement préparé par projection thermique. Sa porosité est de 35% et son épaisseur 0,7 mm.

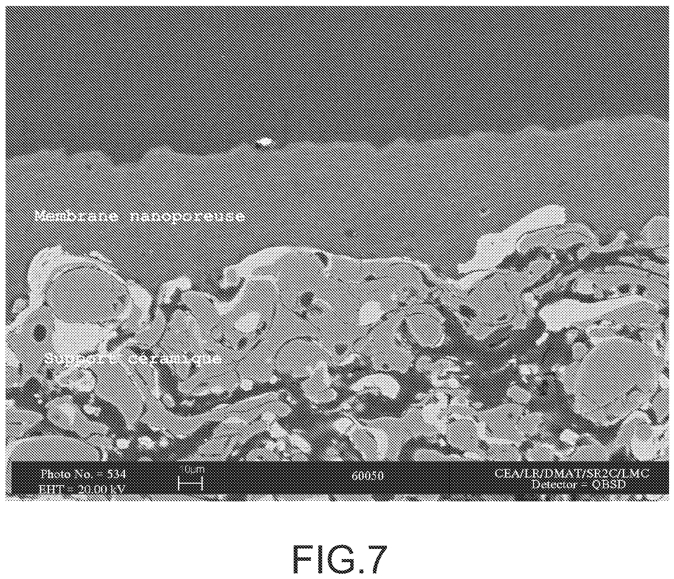

Un sol aqueux de silice à 5%, de granulométrie 60 nm est mélangé avec 7,5% en masse d'une poudre d'alumine monodisperse de 150 nm de granulométrie. Ce mélange est injecté dans la zone chaude (8000 - 15000K) d'un plasma thermique dans les mêmes conditions que l'exemple 1 et avec les mêmes moyens. Un dépôt de 30 μm d'épaisseur, et de porométrie 30 nm est obtenu. Il correspond aux spécificités d'une membrane d'ultrafiltration. La perméance de l'empilement (support métallique/couche intermédiaire Al$_2$O$_3$/membrane sélective) est d'environ 800 NL/min/bar/m$^2$. La figure 7 est une micrographie d'une coupe de cette membrane.

On pourra, en relation avec les exemples 1 et 2 se reporter à la figure 8

L'exemple 1 (schéma de gauche de la Fig. 8) montre la réalisation d'une membrane de porométrie centrée sur 10 nm à partir d'un sol de silice de granulométrie d = 33 nm.

Dans l'exemple 2 (schéma de droite de la Fig. 8), l'utilisation d'un sol de granulométrie plus grosse D = 60 nm mélangé avec une poudre d'alumine (150 nm) permet d'augmenter la taille des défauts d'empilement et ainsi la porométrie (P), centrée sur 30 nm.

Exemple 3 (comparatif) :

L'exemple 3 décrit la fabrication d'une membrane d'ultrafiltration sur support céramique.

Un sol aqueux de silice mésoporeuse à 10%, de granulométrie 40 nm est est injecté dans un plasma thermique dans les mêmes conditions que l'exemple 1 et avec les mêmes moyens.

Exemple 4 (comparatif) :

L'exemple 4 décrit la fabrication d'une membrane de séparation de phase sur support céramique.

Un substrat poreux d'alumine/oxyde de titane est préalablement préparé par projection thermique. Sa porosité est de 35% et son épaisseur 0,7 mm.

Un sol aqueux de silice à 5%, de granulométrie 60 nm est mélangé avec 7,5% en masse d'une poudre d'alumine monodisperse de 150 nm de granulométrie. Ce mélange est injecté dans un plasma thermique dans les mêmes conditions que l'exemple 1 et avec les mêmes moyens. Un dépôt de 30 μm d'épaisseur, et de porométrie 30 nm est obtenu.

La membrane supportée est immergée dans de l'eau à 80°C pendant 5h, puis étuvée à 110°C pendant 10h. Elle est ensuite plongée dans un solvant fluoré contenant 1% d'un dérivé fluoroalcoxysilane $(CF_3(CH_2)_5Si(OCH_3)_3$ pendant 48h. Un traitement thermique à 130°C pendant 1h30 crée une liaison covalente entre le silane et l'oxyde métallique formant la membrane. La membrane est ainsi hydrophobe. L'angle de contact d'une goutte d'eau est proche de 110°. La membrane retient l'eau jusqu'à des pressions élevées (>10 bar) mais reste perméable aux gaz.

Exemple 5 (comparatif) :

Dans cet exemple, on décrit la préparation d'un dépôt de silice mésoporeuse par projection plasma d'un sol aqueux de silice.

Un sol aqueux à 4 % de silice mésoporeuse de granulométrie entre 20 et 40 nm est projeté sur des substrats poreux céramiques identiques à ceux de l'exemple 2 et sur une plaquette « wafer » de silicium pour analyse micrographique.

La taille des mésopores des particules initiales est de 2 et 3 nm de diamètre. Ces mésopores adoptent une structure hexagonale *P6m*.

La figure 9 montre une micrographie obtenue par microscope électronique à transmission du dépôt de sol mésoporeux sur le wafer de silicium. On remarque que les particules restent identifiables et sont différenciées les unes des autres, mais que lorsqu'on les compare leur forme initiale (voir fig. 4), elles présentent des dendrites en périphérie. Cela correspond à une fusion partielle, sur la surface, du matériau, en l'occurrence de la silice. L'intérieur de la particule reste dans son état originel comme l'atteste la micrographie de la figure 9 : la structure mésoporeuse est donc conservée.

Plus précisément sur la figure 9, on identifie par exemple une particule mésoporeuse (A) un réseau de mésopores (B) et des dendrites (C).

**REFERENCES BIBLIOGRAPHIQUES**

**[1]** US-A-5,032,568, Lau et al, 1991.

**[2]** US-A-4,982,067, Marantz et al, 1991.

**[3]** US-A-5,413,821, Ellis et al, 1995.

**[4]** US-A-5,609,921, Gitzhofer et al, 1997.

**[5]** US-A-6,447,848, Chow et al, 2002.

**[6]** WO-A-97/18341, Kear et al, 1997.

**[7]** Rao N.P., Lee H.J., Hansen D.J., Heberlein J.V.R., McMurry P.H., Girshick S.L., « Nanostructured Materials production by Hypersonic Plasma Particle Déposition », Nanostructured Materials, 1997, 9, pp. 129-132.

**[8]** FR-A-2 707 763 (CEA), H. Floch & P. Belleville, « Matériau composite à indice de réfraction élevé, procédé de fabrication de ce matériau composite et matériau optiquement actif comrpenant ce matériau composite ».

**[9]** FR-A-2 682 486 (CEA), H. Floch & M. Berger, « Miroir diélectrique interférentiel et procédé de fabrication d'un tel miroir ».

**[10]** FR-A-2 703 791 (CEA), P. Belleville & H. Floch, « Procédé de fabrication de couches minces présentant des propriétés optiques et de résistance à l'abrasion ».

**[12]** W. Stöber, A. Fink & E. Bohn, Journal of Colloid and Interface Science, 26, 1968, pp. 62-69.

**[13]** « Functional Hybrid Materials », P. Gomez-Romero & C. Sanchez, Wiley-VCH Publishers, 2004.

**[14]** « Plasmas thermiques », Production et applications, P. Fauchais, Techniques de l'ingénieur, traité génie électrique, D2820-1 à D2820-25.

**[15]** « Characterizations of LPPS processes under various spray conditions for potentiel applications », A. Refke, G. Barbezat, JL. Dorier, M. Gindrat, C. Hollenstein, Proc. Of International Thermal Spray, Conférence 2003, Orlando, Florida, USA, 5-8 May 2003.

**[16]** « New applications and new product qualities by radiofrequency plasma spraying », R. Henne, V. Borck, M. Müller, R. Ruckdäsch, G. Schiller, Proc. of Tagunsband Proceedings, United Thermal Spray Conference, Düsseldorf, 17-19 mars 1999.

**[17]** Somiya S., Yoshimura M., Nakai Z., Hishinuma K., Kumati T., « Hydrothermal processing of ultrafine single crystal zirconia and hafnia powders with homogeneous dopants », Advances in ceramics, 21, 1987, pp. 43-55.

**[18]** US-A1-2004/0229031, Gell et al., 2004.

**[19]** EP-A1-1 134 302, Baglioni et al., 2001

**Revendications**

1. Procédé de préparation d'au moins une couche nanoporeuse de nanoparticules choisies parmi les nanoparticules d'oxyde métallique, les nanoparticules d'oxydes métalliques, et les mélanges de celles-ci, sur une surface d'un substrat, dans lequel on injecte au moins un sol colloïdal comprenant un solvant, dans lequel lesdites nanoparticules sont dispersées et stabilisées, dans un jet de plasma thermique qui projette lesdites nanoparticules sur ladite surface ; ladite couche nanoporeuse ayant une porométrie de 1 à 500 nm, de préférence de 1 à 100 nm, de préférence encore de 1 à 50 nm ; les nanoparticules étant directement stabilisées dans le solvant utilisé au cours de leur synthèse, formant ainsi le sol, ou peptisées ultérieurement si elles sont synthétisées par précipitation ; **caracterisé en ce que** le sol est injecté dans une zone froide du plasma dans laquelle règne une température de 3000 à 4000 K et le solvant dudit sol étant choisi parmi les alcools tels que les alcools aliphatiques de 1 à 5C comme l'éthanol ou le méthanol.

2. Procédé selon la revendication 1, dans lequel les nanoparticules ont une taille de 1 à 500 nm, de préférence de 1 à 100 nm, de préférence encore de 1 à 50 nm.

3. Procédé selon l'une quelconque des revendications précédentes, dans lequel les nanoparticules ont une granulométrie centrée sur un ou plusieurs pics.

4. Procédé selon l'une quelconque des revendications précédentes, dans lequel le ou les oxydes métalliques sont choisis parmi $SiO_2$, $ZrO_2$, $TiO_2$, $Ta_2O_5$, $HfO_2$, $ThO_2$, $SnO_2$. $VO_2$, $In_2O_3$, $Sb_2O_3$, $CeO_2$, $ZnO$, $Nb_2O_5$, $V_2O_5$, $Al_2O_3$, $Sc_2O_3$, $Ce_2O_3$, $NiO$, $MgO$, $Y_2O_3$, $WO_3$, $BaTiO_3$, $Fe_2O_3$, $Fe_3O_4$, $Sr_2O_3$, $(PbZr)TiO_3$, $(BaSr)TiO_3$, $Co_2O_3$, $Cr_2O_3$, $Mn_2O_3$, $Mn_3O_4$, $Cr_3O_4$, $MinO_2$, et $RuO_2$.

5. Procédé selon la revendication 1, dans lequel le sol est préparé par précipitation en milieu aqueux ou par synthèse sol-gel en milieu organique à partir d'un précurseur de nanoparticules.

6. Procédé selon la revendication 5, dans lequel le précurseur de nanoparticules est choisi dans le groupe comprenant un sel de métalloïde, un sel de métal, un alcoxyde métallique, ou un mélange de ceux-ci.

7. Procédé selon la revendication 6, dans lequel le métal ou métalloïde du sel ou de l'alcoxyde précurseur de nanoparticules est choisi dans le groupe comprenant le silicium, le titane, le zirconium, le hafnium, l'aluminium, le tantale, le niobium, le cérium, le nickel, le fer, le zinc, le chrome, le magnésium, le cobalt, le vanadium, le baryum, le strontium, l'étain, le scandium, l'indium, le plomb, l'yttrium, le tungstène, le manganèse, l'or, l'argent, le platine, le palladium, le nickel, le cuivre, le cobalt, le ruthénium, le rhodium, l'europium et les autres terres rares.

8. Procédé selon l'une quelconque des revendications précédentes, dans lequel le sol est un sol de nanoparticules d'oxyde(s) de métal (métaux) telles que la zircone, la silice, le dioxyde de titane, l'alumine, l'hafnine.

9. Procédé selon la revendication 1, dans lequel tout ou partie des nanoparticules sont des particules intrinsèquement poreuses, macroporeuses, microporeuses, mésoporeuses ou mésostructurées.

10. Procédé selon l'une quelconque des revendications précédentes, dans lequel tout ou partie des particules sont des particules denses et le sol contient éventuellement un agent texturant et/ou un agent porogène tel qu'un tensioactif.

11. Procédé selon l'une quelconque des revendications précédentes, dans lequel le sol est un sol mixte.

12. Procédé selon la revendication 1, dans lequel le sol comprend en outre des molécules organiques.

13. Procédé selon la revendication 12, dans lequel les molécules organiques sont des molécules de stabilisation des nanoparticules dans le sol et/ou des molécules qui fonctionnalisent les nanoparticules et/ou des agents texturants et/ou porogènes.

14. Procédé selon l'une quelconque des revendications précédentes dans lequel la couche nanoporeuse a une porosité supérieure ou égale à 20%, de préférence supérieure ou égale à 50%.

15. Procédé selon l'une quelconque des revendications précédentes, dans lequel à l'issue de sa préparation, ladite (lesdites) couche(s) nanoporeuse(s) de particules est (sont) fonctionnalisée(s) en totalité ou en partie afin par exemple de lui (leur) conférer une sélectivité vis-à-vis d'un fluide.

16. Procédé selon la revendication 15, dans lequel ladite (lesdites) couche(s) nanoporeuse(s) de particules est (sont) fonctionnalisée(s) en totalité ou en partie par greffage covalent de molécules.

17. Procédé selon la revendication 16, dans lequel lesdites molécules greffées sont des molécules hydrophobes telles que des molécules perfluorées ou alkyles.

18. Procédé selon l'une quelconque des revendications précédentes, dans lequel le substrat est choisi parmi les substrats métalliques, céramiques et les substrats thermosensibles.

19. Procédé selon l'une quelconque des revendications précédentes, dans lequel ladite surface du substrat est une surface convexe et/ou concave et/ou une surface d'une cavité interne à une pièce.

20. Procédé selon la revendication 1, dans lequel le sol colloïdal est injecté dans le jet de plasma sous forme de gouttes ou de jet.

21. Procédé selon la revendication 1, dans lequel le jet de plasma est un jet de plasma d'arc.

22. Procédé selon la revendication 1, dans lequel le jet de plasma est tel qu'il provoque une fusion partielle des nanoparticules injectée.

23. Procédé selon la revendication 1, dans lequel le plasma constituant le jet a une température de 5000 K à 15000 K.

24. Procédé selon la revendication 1, dans lequel le plasma constituant le jet a une viscosité de $10^{-4}$ à $5\times10^{-4}$ kg/m.s.

25. Procédé selon la revendication 1, dans lequel le jet de plasma est généré à partir d'un gaz plasmagène choisi dans le groupe comprenant Ar, $H_2$, He et $N_2$.

26. Procédé selon l'une quelconque des revendications précédentes, dans lequel on injecte simultanément ou non plusieurs sols dans le plasma, chacun de ces sols pouvant différer quant à sa composition chimique et/ou sa granulométrie, et/ou sa structure interne, et/ou son solvant et/ou la nature des additifs.

27. Procédé selon l'une quelconque des revendications précédentes, dans lequel on injecte en outre dans le plasma simultanément ou non auxdits sols une ou plusieurs poudres nanométriques « sèches ».

28. Procédé selon l'une quelconque des revendications précédentes, qui est mis en oeuvre plusieurs fois sur une même surface de substrat avec différents sols, différents en composition et/ou en concentration et/ou en taille des particules et/ou en structure des particules et, éventuellement avec différentes poudres sèches nanométriques pour réaliser des couches successives de différentes compositions et/ou de différentes porosités/porométries.

29. Procédé selon l'une quelconque des revendications précédentes, dans lequel le substrat est constitué par un support poreux de porométrie $d_s$ sur lequel on dépose une ou plusieurs couches intermédiaires 1i, 2i, ni de porométries moyennes $d_{1i}$, $d_{2i}$, ..., $d_{ni}$, décroissantes $d_{ni}<d_{2i}<d_{1i}<d_s$, par un procédé de projection d'un sol ou d'un mélange de sol (s) et de poudre (s) nanométrique(s), et l'on dépose finalement une couche nanoporeuse qui a une porométrie moyenne $dm<d_{ni}$ sur la dernière couche intermédiaire.

30. Procédé selon la revendication 1, dans lequel la couche nanoporeuse a une épaisseur de 0,1 $\mu$m à 5 mm, de préférence de 0,1 $\mu$m à 500 $\mu$m, par exemple de 1 à 100 $\mu$m, mieux de 2 à 50 $\mu$m.

**Patentansprüche**

1. Verfahren zur Herstellung wenigstens einer nanoporösen Schicht aus Nanopartikeln, ausgewählt unter den Metalloxid-Nanopartikeln, den Nanopartikeln von metallischen Oxiden, und den Mischungen von diesen, auf einer Oberfläche eines Substrats, bei dem man wenigstens ein ein Lösungsmittel umfassendes kolloidales Sol, in dem die genannten Nanopartikel verteilt und stabilisiert sind, in einen thermischen Plasmastrahl einspritzt, der die genannten Nanopartikel auf die genannte Oberfläche schleudert ; wobei die genannte nanoporöse Schicht eine Porometrie bzw. Porengröße von 1 bis 500 nm, bevorzugt von 1 bis 100 nm, noch bevorzugter von 1 bis 50 nm aufweist, wobei die Nanopartikel direkt in dem im Laufe ihrer Synthese benutzten Lösungsmittel stabilisiert werden, auf diese Weise das Sol bildend, oder später peptisiert werden, wenn sie durch Fällung synthetisiert werden,
**dadurch gekennzeichnet, dass** das Sol in eine kalte Zone des Plasmas eingespritzt wird, in der eine Temperatur von 3000 bis 4000 K herrscht, und das Lösungsmittel des genannten Sols ausgewählt wird unter den Alkoholen wie etwa den aliphathischen Alkoholen von 1 bis 5C wie das Ethanol oder das Methanol.

2. Verfahren nach Anspruch 1, bei dem die Nanopartikel eine Größe von 1 bis 500 nm, bevorzugt von 1 bis 100 nm, noch bevorzugter von 1 bis 50 nm haben.

3. Verfahren nach einem der vorhergehenden Ansprüche, bei dem die Nanopartikel eine auf eine oder mehrere Spitzenwerte zentrierte Granulometrie haben.

4. Verfahren nach einem der vorhergehenden Ansprüche, bei dem das oder die metallischen Oxide ausgewählt werden unter $SiO_2$, $ZrO_2$, $TiO_2$, $Ta_2O_5$, $HfO_2$, $ThO_2$, $SnO_2$, $VO_2$, $In_2O_3$, $Sb_2O_3$, $CeO_2$, ZnO, $Nb_2O_5$, $V_2O_5$, $Al_2O_3$, $Sc_2O_3$, $Ce_2O_3$, NiO, MgO, $Y_2O_3$, $WO_3$, $BaTiO_3$, $Fe_2O_3$, $Fe_3O_4$, $Sr_2O_3$, (Pb-Zr)$TiO_3$, (BaSr)$TiO_3$, $Co_2O_3$, $Cr_2O_3$, $Mn_2O_3$, $Mn_3O_4$, $Cr_3O_4$, $MnO_2$, und $RuO_2$.

5. Verfahren nach Anspruch 1, bei dem das Sol hergestellt wird durch Fällung im wässrigen Milieu oder durch Sol-Gel-Synthese im organischen Milieu, ausgehend von einem Nanopartikel-Präkursor.

6. Verfahren nach Anspruch 5, bei dem der Nanopartikel-Präkursor ausgewählt wird in der Gruppe, die ein Metalloidsalz, ein Metallsalz, ein Metallalkoxid, oder eine Mischung von diesen umfasst.

7. Verfahren nach Anspruch 6, bei dem das Metall oder Metalloid des Salzes oder des Alkoxids des Nanopartikel-Präkursors ausgewählt wird in der Gruppe, die umfasst: das Silicium, das Titan, das Zirkonium, das Hafnium, das Aluminium, das Tantal, das Niobium, das Cerium, das Nickel, das Eisen, das Zink, das Chrom, das Magnesium, das Kobalt, das Vanadium, das Baryum, das Strontium, das Zinn, das Scandium, das Indium, das Blei, das Yttrium, das Wolfram, das Mangan, das Gold, das Silber, das Platin, das Palladium, das Nickel, das Kupfer, das Kobalt, das Ruthenium, das Rhodium, das Europium und die anderen Seltenen Erden.

8. Verfahren nach einem der vorhergehenden Ansprüche, bei dem das Sol ein Sol aus Nanopartikeln aus dem (den) Oxid(en) von Metall(en) wie etwa dem Zirkon, dem Siliciumdioxid, dem Titandioxid, dem Aluminiumoxid, dem Hafniumoxid ist.

9. Verfahren nach Anspruch 1, bei dem die Nanopartikel insgesamt oder teilweise intrinsisch porös, makroporös, mikroporös, mesoporös oder mesostrukturiert sind.

10. Verfahren nach einem der vorhergehenden Ansprüche, bei dem die Partikel insgesamt oder teilweise dichte Partikel sind und das Sol eventuell ein Texturierungsmittel und/oder ein Porenerzeugungsmittel wie etwa einen Oberflächenaktivstoff enthält.

11. Verfahren nach einem der vorhergehenden Ansprüche, bei dem das Sol ein gemischtes Sol ist.

12. Verfahren nach Anspruch 1, bei dem das Sol außerdem organische Moleküle umfasst.

13. Verfahren nach Anspruch 12, bei dem die organischen Moleküle Moleküle zur Stabilisierung der Nanopartikel in dem Sol sind, und/oder Moleküle, welche die Nanopartikel funktionalisieren, und/oder Texturierungs- und/oder Porenerzeugungsmittel, sind.

14. Verfahren nach einem der vorhergehenden Ansprüche, bei dem die nanoporöse Schicht eine Porosität größer oder gleich 20%, vorzugsweise größer oder gleich 50% hat.

15. Verfahren nach einem der vorhergehenden Ansprüche, bei dem am Ende seiner Herstellung die genannte(n) nanoporöse(n) Partikelschicht(en) ganz oder teilweise funktionalisiert wird (werden) um ihr (ihnen) zum Beispiel eine Selektivität gegenüber einem Fluid zu verleihen.

16. Verfahren nach Anspruch 15, bei dem die genannte(n) nanoporöse(n) Partikelschicht(en) durch kovalentes Pfropfen von Molekülen ganz oder teilweise funktionalisiert wird (werden).

17. Verfahren nach Anspruch 16, bei dem die genannten gepfropften Moleküle hydrophobe Moleküle sind, zum Beispiel perfluorierte oder Alkyl-Moleküle.

18. Verfahren nach einem der vorhergehenden Ansprüche, bei dem das Substrat ausgewählt wird unter den keramischen, metallischen Substraten und den thermosensiblen Substraten.

19. Verfahren nach einem der vorhergehenden Ansprüche, bei dem die genannte Oberfläche des Substrats eine konvexe und/oder eine konkave Oberfläche ist, und/oder eine Oberfläche eines im Innern eines Teils befindlichen, Hohlraum ist.

20. Verfahren nach Anspruch 1, bei dem das kolloide Sol tröpfchen- oder strahlförmig in den Plasmastrahl eingespritzt wird.

21. Verfahren nach Anspruch 1, bei dem der Plasmastrahl ein Bogenplasmastrahl ist.

22. Verfahren nach Anspruch 1, bei dem der Plasmastrahl derart ist, dass er eine partielle Fusion der eingespritzten Nanopartikel bewirkt.

23. Verfahren nach Anspruch 1, bei dem das den Strahl bildende Plasma eine Temperatur von 5000 K bis 15000 K hat.

24. Verfahren nach Anspruch 1, bei dem das den Strahl bildende Plasma eine Viskosität von $10^{-4}$ bis $5 \times 10^{-4}$ kg/m.s aufweist.

25. Verfahren nach Anspruch 1, bei dem der Plasmastrahl aus einem plasmagenen Gas, ausgewählt in der Ar, $H_2$, He und $N_2$ umfassenden Gruppe, erzeugt wird.

26. Verfahren nach einem der vorhergehenden Ansprüche, bei dem man, simultan oder nicht, mehrere Sole in das Plasma einspritzt, wobei jede dieser Solen sich unterscheiden kann in Bezug auf ihre chemische Zusammensetzung und/oder ihre Granulometrie, und/oder ihre interne Struktur, und/oder ihr Lösungsmittel und/oder die Art der Zusatzstoffe.

27. Verfahren nach einem der vorhergehenden Ansprüche, bei dem man außerdem in das Plasma, simultan mit den genannten Solen oder nicht, ein oder mehrere "trockene" nanometrische Pulver einspritzt.

**28.** Verfahren nach einem der vorhergehenden Ansprüche, das auf eine selbe Substratoberfläche mehrere Male angewendet wird mit verschiedenen Solen mit unterschiedlicher Zusammensetzung und/oder Konzentration und/oder Partikelgröße und/oder Partikelstruktur und, eventuell, verschiedenen trockenen nanometrischen Pulvern, um sukzessive Schichten mit unterschiedlichen Zusammensetzungen und/oder unterschiedlichen Porositäten/Porometrien zu realisieren.

**29.** Verfahren nach einem der vorhergehenden Ansprüche, bei dem das Substrat gebildet wird durch einen porösen Träger mit der Porosität $d_s$, auf dem man eine oder mehrere Zwischenschichten 1i, 2i, ni von mittlerer abnehmender Porosität $d_{1i}$, $d_{2i}$, ..., $d_{ni}$, $d_{ni}$ < $d_{2i}$ < $d_{1i}$ < $d_s$, durch ein ein Sol oder eine Mischung aus Sol(en) und nanometrischem (nanometrischen) Pulver(n) umfassendes Spritzverfahren abscheidet, und man schließlich auf der letzten Zwischenschicht eine nanoporöse Schicht abscheidet, die eine mittlere Porosität $d_m$ < $d_{ni}$ hat.

**30.** Verfahren nach Anspruch 1, bei dem die nanoporöse Schicht eine Dicke von 0,1 $\mu$m bis 5 mm, vorzugsweise 0,1 $\mu$m bis 500 $\mu$m hat, zum Beispiel von 1 bis 100 $\mu$m, besser von 2 bis 50 $\mu$m.

**Claims**

**1.** Process for producing at least one nanoporous layer of nanoparticles chosen from nanoparticles of a metal oxide, nanoparticles of metal oxides, and mixtures of said nanoparticles, on a surface of a substrate, in which at least one colloidal sol comprising a solvent, in which said nanoparticles are dispersed and stabilized, is injected into a thermal plasma jet which sprays said nanoparticles onto said surface; said nanoporous layer having a pore size of 1 to 500 nm, preferably of 1 to 100 nm and more preferably of 1 to 50 nm; the nanoparticles being directly stabilized in the solvent used during their synthesis, thus forming the sol, or subsequently peptized if they are synthetized by precipitation; **characterized in that** the sol is injected into a cold zone of the plasma, in which zone the temperature ranges from 3000 to 4000 K, and the solvent being chosen from alcohols such as 1C to 5C aliphatic alcohols, such as ethanol and methanol.

**2.** Process according to Claim 1, in which the nanoparticles have a size of 1 to 500 nm, preferably 1 to 100 nm and more preferably 1 to 50 nm.

**3.** Process according to anyone of the preceding claims, in which the nanoparticles have a particle size centred on one or more peaks.

**4.** Process according to any one of the preceding claims, in which the metal oxide or metal oxides are chosen from $SiO_2$, $ZrO_2$, $TiO_2$, $Ta_2O_5$, $HfO_2$, $ThO_2$, $SnO_2$, $VO_2$, $In_2O_3$, $Sb_2O_3$, $CeO_2$, $ZnO$, $Nb_2O_5$, $V_2O_5$, $Al_2O_3$, $Sc_2O_3$, $Ce_2O_3$, $NiO$, $MgO$, $Y_2O_3$, $WO_3$, $BaTiO_3$, $Fe_2O_3$, $Fe_3O_4$, $Sr_2O_3$, $(PbZr)TiO_3$, $(BaSr)TiO_3$, $Co_2O_3$, $Cr_2O_3$, $Mn_2O_3$, $Mn_3O_4$, $Cr_3O_4$, $MnO_2$ and $RuO_2$.

**5.** Process according to Claim 1, in which the sol is produced by precipitation in an aqueous medium or by sol-gel synthesis in an organic medium starting from a nanoparticles precursor.

**6.** Process according to Claim 5, in which the nanoparticle precursor is chosen from the group comprising a metalloid salt, a metal salt, a metal alkoxide or a mixture of these.

**7.** Process according to Claim 6, in which the metal or metalloid of the nanoparticles precursor salt or alkoxide is chosen from the group comprising silicon, titanium, zirconium, hafnium, aluminium, tantalum, niobium, cerium, nickel, iron, zinc, chromium, magnesium, cobalt, vanadium, barium, strontium, tin, scandium, indium, lead, yttrium, tungsten, manganese, gold, silver, platinum, palladium, nickel, copper, cobalt, ruthenium, rhodium, europium and other rare earths.

**8.** Process according to any one of the preceding claims, in which the sol is a sol of nanoparticles of metal(s) oxide(s), such as zirconia, silica, titanium dioxide (titania), alumina or hafnia nanoparticles.

**9.** Process according to Claim 1, in which all or some of the nanoparticles are intrinsically porous, macroporous, microporous, mesoporous or mesostructured particles.

**10.** Process according to any one of the preceding claims, in which all or some of the particles are dense particles and the sol optionally contains a texturizing agent and/or a pore-forming agent such as a surfactant.

**11.** Process according to any one of the preceding claims, in which the sol is a hybrid (mixed) sol.

**12.** Process according to Claim 1, in which the sol further comprises organic molecules.

**13.** Process according to Claim 12, in which the organic molecules are molecules for stabilizing the nanoparticles in the sol and/or molecules that functionalize the nanoparticles and/or texturizing and/or pore-forming agents.

**14.** Process according to any one of the preceding claims, in which the nanoporous layer has a porosity equal to or greater than 20%, preferably equal to or greater than 50%.

**15.** Process according to any one of the preceding claims, in which, after the production of said nanoporous layer(s) of particles, this(these) layer(s) are functionalized, either completely or partly, so as for example to give it(them) selectivity with respect to a fluid.

**16.** Process according to Claim 15, in which said nanoporous layer(s) of particles is(are) completely or partly functionalized by covalent grafting of molecules.

**17.** Process according to Claim 16, in which said grafted molecules are hydrophobic molecules, such as perfluorinated or alkyl molecules.

**18.** Process according to any one of the preceding claims, in which the substrate is chosen from metal substrates, ceramic substrates and heat-sensitive substrates.

**19.** Process according to any one of the preceding claims, in which said surface of the substrate is a convex and/or concave surface and/or a surface of a cavity internal to a part.

**20.** Process according to Claim 1, in which the colloidal sol is injected in drop or jet form into the plasma jet.

**21.** Process according to Claim 1, in which the plasma jet is an arc plasma jet.

**22.** Process according to Claim 1, in which the plasma jet is such that it causes partial melting of the injected nanoparticles.

**23.** Process according to Claim 1, in which the plasma constituting the jet has a temperature ranging from 5000 K to 15000 K.

**24.** Process according to Claim 1, in which the plasma constituting the jet has a viscosity ranging from $10^{-4}$ to $5 \times 10^{-4}$ kg/m.s.

**25.** Process according to Claim 1, in which the plasma jet is generated from a plasma-forming gas chosen from the group comprising Ar, $H_2$, He and $N_2$.

**26.** Process according to any one of the preceding claims, in which several sols are injected into the plasma, either simultaneously or not, each of these sols being able to differ as regards its chemical composition and/or its particle size and/or its internal structure, and/or its solvent, and/or the nature of the additives.

**27.** Process according to any one of the preceding claims, in which one or more "dry" nanometric powders are furthermore injected into the plasma at the same time as said sols or not.

**28.** Process according to any one of the preceding claims, which is implemented several times on the same substrate surface with different sols, these differing in composition and/or in concentration and/or in particles size and/or in particles structure, and, optionally, with different dry nanometric powders in order to produce successive layers of different compositions and/or different porosities/pore sizes.

**29.** Process according to any one of the preceding claims, in which the substrate consists of a porous support of pore size $d_s$ on which are deposited one or more intermediate layers 1i, 2i, ni having decreasing mean pore sizes $d_{1i}$, $d_{2i}$, ..., $d_{ni}$, where $d_{ni} < d_{2i} < d_{1i} < d_s$, by a process of spraying a sol or a mixture of one or more sol (s) and of one or more nanometric powder(s), and finally a nanoporous layer which has a mean pore size dm < $d_{ni}$ is deposited on the last intermediate layer.

**30.** Process according to claim 1, wherein the nanoporous layer has a thickness of 0.1 $\mu$m to 5 mm, preferably of 0.1 $\mu$m to 500 $\mu$m, for example of 1 to 100 $\mu$m, and better still of 2 to 50 $\mu$m.

FIG.1

FIG.2

FIG.3

FIG.4

FIG.5

Couche sélective.
Porométrie moyenne $d_m < d_{2i}$

$2^{ème}$ couche intermédiaire.
Porométrie moyenne $d_{2i} < d_{1i}$

$1^{ère}$ couche intermédiaire.
Porométrie moyenne $d_{1i} < d_s$

Support macroporeux.
Taille moyenne des pores $d_s$

FIG.6

FIG.7

Léger frittage

Défaut = ø pore p

Défaut = ø pore P

$d < D \Rightarrow p < P$

FIG.8

Particule mésoporeuse

Réseau de mésopores

A

B

Dendrites

C

50 nm

FIG.9

# RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040229031 A1, Maurice Gell
- EP 1134302 A1
- US 6261510 A
- US 5342431 A
- WO 9911582 A
- US 5032568 A, Lau
- US 4982067 A, Marantz
- US 5413821 A, Ellis
- US 5609921 A, Gitzhofer
- US 6447848 A, Chow
- WO 9718341 A, Kear
- FR 2707763 A
- FR 2682486 A
- FR 2703791 A

**Littérature non-brevet citée dans la description**

- **RAO N.P. ; LEE H.J. ; HANSEN D.J. ; HEBERLEIN J.V.R. ; MCMURRY P.H. ; GIRSHICK S.L.** Nanostructured Materials production by Hypersonic Plasma Particle Déposition. *Nanostructured Materials,* 1997, vol. 9, 129-132
- **W. STÖBER ; A. FINK ; E. BOHN.** *Journal of Colloid and Interface Science,* 1968, vol. 26, 62-69
- **P. GOMEZ-ROMERO ; C. SANCHEZ.** Functional Hybrid Materials. Wiley-VCH Publishers, vol. 2004
- **P. FAUCHAIS.** Plasmas thermiques. *Production et applications,* D2820-1, D2820-25
- **A. REFKE ; G. BARBEZAT ; JL. DORIER ; M. GINDRAT ; C. HOLLENSTEIN.** Characterizations of LPPS processes under various spray conditions for potentiel applications. *Proc. Of International Thermal Spray, Conférence 2003,* 05 Mai 2003
- **R. HENNE ; V. BORCK ; M. MÜLLER ; R. RUCKDÄSCH ; G. SCHILLER.** New applications and new product qualities by radiofrequency plasma spraying. *Proc. of Tagunsband Proceedings, United Thermal Spray Conference,* 17 Mars 1999
- **SOMIYA S. ; YOSHIMURA M. ; NAKAI Z. ; HISHINUMA K. ; KUMATI T.** Hydrothermal processing of ultrafine single crystal zirconia and hafnia powders with homogeneous dopants. *Advances in ceramics,* 1987, vol. 21, 43-55